# EUROPÄISCHE PATENTSCHRIFT

(11) **EP 3 570 961 B1**
(45) Veröffentlichungstag und Bekanntmachung des Hinweises auf die Patenterteilung: **04.05.2022**
(21) Anmeldenummer: 18703692.6
(22) Anmeldetag: 18.01.2018
(51) Int. Cl.: B01D 46/02, B60H 3/06

(54) **STRASSENFAHRZEUG MIT UMGEBUNGSLUFTREINIGUNGSVORRICHTUNG**
ROAD VEHICLE HAVING AN AMBIENT AIR PURIFICATION DEVICE
VÉHICULE ROUTIER COMPRENANT UN DISPOSITIF D'ÉPURATION D'AIR AMBIANT

(30) Priorität: 18.01.2017 DE 102017000412; 22.05.2017 DE 102017004864; 19.07.2017 DE 102017006794
(43) Veröffentlichungstag der Anmeldung: 27.11.2019
(73) Patentinhaber: MANN+HUMMEL GmbH, 71636 Ludwigsburg (DE)
(72) Erfinder: KELLER, Florian, 71640 Ludwigsburg (DE); PELZ, Andreas, 70806 Kornwestheim (DE); KLEIN, Gunnar-Marcel, 71720 Oberstenfeld (DE); LÖHL, Thomas, 74395 Mundelsheim (DE); MÜLLER, Thilo, 76189 Karlsruhe (DE); SCHULZ, Christoph, 70569 Stuttgart (DE); GUSEK, Jens, 74392 Freudental (DE)
(74) Vertreter: Mann + Hummel Intellectual Property
(86) Internationale Anmeldenummer: PCT/EP2018/051224
(87) Internationale Veröffentlichungsnummer: WO 2018/134313

(56) Entgegenhaltungen:
- EP-A2- 1 837 066
- WO-A1-2005/068053
- WO-A1-2009/155809
- DE-A1- 10 329 961
- JP-A- 2008 302 803
- US-A1- 2010 095 924

## Beschreibung

### Technisches Gebiet

Die Erfindung bezieht sich auf ein Straßenfahrzeug, insbesondere, aber nicht hierauf beschränkt, einen Personenkraftwagen oder einen Lastkraftwagen, insbesondere einen leichten Lastkraftwagen, der eine Umgebungsluftreinigungsvorrichtung aufweist, die insbesondere zur Abscheidung von Stäuben, insbesondere Feinstäuben, und/oder Gasen ausgebildet ist. Ferner bezieht sich die Erfindung auf die Verwendung einer Umgebungsluftreinigungsvorrichtung.

Aufgrund der fortschreitenden Urbanisierung besteht vor allem in Ballungszentren das Problem, dass die Umgebungsluft durch Industrieabgase, den Straßenverkehr und private Feuerstätten vor allem bei widrigen Wetterlagen (kein Regen, Inversion, geringe Windgeschwindigkeiten, kein Luftaustausch zwischen Höhenschichten) Grenzwerte für Feinstaub und/oder Gase wie Ozon, NOₓ, CO um ein Vielfaches überschritten werden können.

Es ist ein bereits im Stand der Technik dokumentierter Ansatz, die ohnehin existierenden Fahrzeugbestände (beispielsweise in Deutschland im Jahr 2014 etwa 44 Mio., in China mehr als 106 Mio. Stück) als mobile Umgebungsluftreiniger einzusetzen.

### Stand der Technik

In der DE 20 2006 019 335 U1 wird eine Feinstaub-Absaugvorrichtung für ein Fahrzeug beschrieben, die am Unterboden des Fahrzeugs angeordnet ist und zur Filtration des in den Fahrzeuginnenraum einzuleitenden Luftstroms eingesetzt wird. Die Feinstaub-Absaugvorrichtung weist in einem Gehäuse ein Gebläse auf, das einen Luftstrom aus der Umgebung in das Gehäuse einsaugt und einem Filterelement zuleitet. Zur Unterstützung der Zufuhr des Luftmassenstroms in die Feinstaub-Absaugvorrichtung ist an dem Gehäuse ein hervorstehendes Strömungsleitblech angeordnet.

Ferner ist aus der JP H04297341 A1 eine Absaugvorrichtung bekannt, die an einem Lastkraftwagen montiert ist. Dort ist zwischen Fahrerkabine und Kofferaufbau eine Ansaughutze vorgesehen, über die die zu reinigende Luft einer Reinigungsvorrichtung, die längs der Fahrzeuglängsachse in einem unter dem Kofferaufbau liegenden Bereich angeordnet ist, zugeführt wird. Die Reinigungsvorrichtung weist ein Gebläse auf, um unter möglichst vielen Betriebsbedingungen, auch im Stand, eine Durchströmung zu erreichen.

Ferner sind passiv durchströmte Systeme aus der WO 2005/094969 A1 (Anordnung an der Seitenwand eines Fahrzeugs) und US 2006/0107636 A1 (Anordnung auf dem Dach) bekannt.

Aus DE 20 2005 005 673 U1 ist eine passive Umgebungsluftreinigungsvorrichtung bekannt, die unter einem hinteren Stoßfänger angeordnet ist und deren Filterelement vertikal durchströmt wird, weshalb zumindest einströmseitig eine Hutze vorzusehen ist, was einen unnötigen Druckverlust erzeugt.

Aus der WO 2009/105800 A1 ist eine Umgebungsluftreinigungsvorrichtung bekannt, die entweder auf dem Dach eines Lastkraftwagens oder im Bereich der Fahrzeugfront angeordnet ist, wobei jeweils Fahrzeugteile stromab des Filters im Strömungsweg stehen.

Aus der WO 2004/080740 A1 ist ein Kraftfahrzeug mit einem Außenluftfilter bekannt, der in einem Bereich der Einwirkung der Hinterräder des Fahrzeugs angeordnet ist, so beispielsweise in einer Radhausschale oder als Teil eines hinteren Schmutzfängers. Nachteilig lassen sich in den dort beschriebenen Bauräumen kaum nennenswerte Filterflächen unterbringen, um eine sinnvolle Luftmenge zu filtern.

Ferner ist aus der WO 2009/155809 A1 ein bestimmter apparativer Aufbau einer Umgebungsluftreinigungsvorrichtung, die sich zur Montage an einem Straßenfahrzeug eignet, bekannt.

Schließlich offenbart US 2010/095924 A1 ein Straßenfahrzeug mit einer Umgebungsluftreinigungsvorrichtung, wobei verschiedene Montagepositionen an dem Fahrzeug beschrieben werden, nämlich an einer vorderen oder hinteren Stoßstange sowie an einem Windabweiser.

Die aus dem Stand der Technik bekannten Lösungen werden in Bauräumen eingesetzt, die es kaum ermöglichen, große Filterflächen dort unterzubringen, sodass aufgrund der erheblichen Durchströmungswiderstände kaum maßgebliche Luftmengen durch die eingesetzten Filterelemente gefördert werden können und/oder die Abmessungen des Fahrzeugs sowie dadurch dessen Aerodynamik, insbesondere der cW-Wert und/oder eine projizierte Anströmfläche, nachteilig verändert werden und/oder einen negativen Einfluss auf die Fahrzeugoptik haben, sodass diese bisher kaum vermarktbar waren.

### Offenbarung der Erfindung

Der Erfindung liegt daher die Aufgabe zugrunde, ein Straßenfahrzeug mit einer Umgebungsluftreinigungsvorrichtung, insbesondere zur Entfernung von Feinstaub aus der Umgebungsluft, anzugeben, die sich dadurch auszeichnet, dass ein größerer Luftstrom hindurchgeführt und/oder eine verbesserte Abscheidewirkung erzielt werden kann und dass diese eine besonders gute Bauraumausnutzung aufweist. Bevorzugt soll keine Hilfsenergie zum Betrieb benötigt und das Erscheinungsbild und/oder die aerodynamischen Kenngrößen des Fahrzeugs nicht oder geringstmöglich nachteilig beeinflusst werden.

Diese Aufgabe wird gelöst durch ein Straßenfahrzeug mit den Merkmalen des Anspruchs 1 und durch eine Verwendung einer Umgebungsluftreinigungsvorrichtung mit den Merkmalen des Anspruchs 11.

Weiterbildungen der Erfindung sind jeweils in den abhängigen Ansprüchen angegeben.

Das erfindungsgemäße Straßenfahrzeug, insbesondere ein Personenkraftwagen, oder ein Lastkraftwagen, insbesondere ein leichter Lastkraftwagen, weist eine Umgebungsluftreinigungsvorrichtung auf, die insbesondere zur Entfernung von Stäuben, insbesondere Feinstäuben, und/oder Gasen aus der Umgebungsluft ausgebildet ist. Die Umgebungsluftreinigungsvorrichtung hat zumindest ein Filterelement und ist quer zu einer Fahrzeuglängsachse in einem Außenbereich des Straßenfahrzeugs angeordnet. Die Umgebungsluftreinigungsvorrichtung ist in einem Unterbodenbereich an einem Fahrzeugheck so angeordnet, dass zumindest das zumindest eine Filterelement hinter einer Hinterachse des Straßenfahrzeugs vorliegt, wobei die Umgebungsluftreinigungsvorrichtung in Fahrzeuglängsrichtung durchströmbar ist. Bevorzugt ist in Fahrtrichtung hinter der Umgebungsluftreinigungsvorrichtung eine freie Abströmzone vorgesehen. Die Umgebungsluftreinigungsvorrichtung ist erfindungsgemäß in einem durch einen Fahrzeugrahmen bereitgestellten Bauraum aufgenommen.

Unter Fahrzeugrahmen wird hierin insbesondere ein Leiterrahmen oder Kastenrahmen verstanden, wie er insbesondere bei Lastkraftwagen zum Einsatz kommt. Diese Rahmenbauart weist als Kernmerkmal zumindest zwei in Fahrzeuglängsrichtung verlaufende Längsträger auf, die zur Versteifung mit Querträgern verbunden sein können.

Alternativ zur Durchströmungsrichtung "in Fahrzeuglängsrichtung" kann die Durchströmung, wenn das Fahrzeug auf einer horizontalen Unterlage steht, auch als "horizontal" bezeichnet werden. Bei einer günstigen Anordnung von Ein- und Auslassöffnung für die zu reinigende Luft und einer entsprechenden Leitung der zu reinigenden Luft innerhalb der Umgebungsluftreinigungsvorrichtung ist selbstverständlich auch eine Strömungsführung innerhalb der Umgebungsluftreinigungsvorrichtung zumindest teilweise senkrecht zur Fahrtrichtung möglich. Bevorzugt wird eine Anordnung hinter der Hinterachse, insbesondere hinter den Hinterrädern, oder auf dem Fahrzeugdach oder im Heckbereich im Bereich eines hinteren Stoßfängers oder integriert in einen hinteren Stoßfänger.

Die Anordnung im Unterbodenbereich am Heck des Fahrzeugs hat den entscheidenden Vorteil gegenüber allen bisher bekannt gewordenen Anordnungsvarianten, dass hierdurch die Außenabmessungen/Außengestaltung des Fahrzeugs nicht verändert werden und dass der Strömungswiderstand des Fahrzeugs hierdurch kaum merklich erhöht wird, während Aufbauten und/oder Anbauten wie aus dem Stand der Technik bekannt, eine Verschlechterung der Umströmung des Fahrzeugs mit sich bringen. Ferner wurde, insbesondere bei Lastkraftwagen mit einer (Leiter-) Rahmenbauweise, überraschenderweise festgestellt, dass in einem Unterbodenbereich am Fahrzeugheck hinter der Hinterachse eine ausreichende Durchströmung vorhanden ist, um eine solche Umgebungsluftreinigungsvorrichtung sogar rein passiv, d. h. ohne differenzdruckerzeugende Einrichtungen wie Lüfter o. Ä., d. h. ausschließlich durch den Fahrtwind, zu betreiben.

Ferner hat eine Anordnung der Umgebungsluftreinigungsvorrichtung am Unterboden, d. h. nahe der Fahrbahn, den Vorteil, dass die Umgebungsluft, die aus dem Bodenbereich angesaugt wird, verglichen mit darüber liegenden Luftschichten in der Regel deutlich stärker mit Schadstoffen, insbesondere Feinstaub, belastet ist. Diesen Zusammenhang charakterisiert der so genannte Wakefaktor; hierbei handelt es sich um einen Umrechnungsfaktor, der aus einem Vergleich von Luftqualitätsmessungen an stationären Messstationen mit fahrzeugnahen Messungen im Bodenbereich gewonnen wurde. Demgemäß ist die Belastung im fahrzeugnahen Bodenbereich ca. um den Faktor 2 höher als die Messwerte der stationären Messstationen.

Es ist daher bevorzugt, die Umgebungsluftreinigungsvorrichtung bzw. deren Lufteinlass in möglichst geringer Höhe anzuordnen. Damit kann die absolut pro gefahrener Strecke abgeschiedene Partikelmenge erhöht werden.

Durch die Anordnung der Umgebungsluftreinigungsvorrichtung in einem Bauraum, der durch einen Fahrzeugrahmen bereitgestellt wird, wird ein an dieser Stelle bei Fahrzeugen mit Fahrzeugrahmen vorhandener ansonsten ungenutzter Bauraum erstmals sinnvoll genutzt. Der Begriff "aufgenommen ist" ist hierbei nicht mit "verbunden" gleichzusetzen; so umfasst die Erfindung sowohl Ausführungsformen, bei denen die Umgebungsluftreinigungsvorrichtung mit dem Fahrzeugrahmen selbst verbunden (verschraubt, vernietet, verschweißt o.ä.) ist, als auch solche Ausführungsformen, bei denen sie zwar im Bereich des durch den Fahrzeugrahmen bereitgestellten Bauraums angeordnet ist, jedoch an einem anderen Vorrichtungsbestandteil befestigt ist.

Bei dem Straßenfahrzeug kann es sich um einen Lastkraftwagen mit einem Fahrzeugrahmen handeln, der einen Aufbau, insbesondere einen Kofferaufbau, trägt. Die Umgebungsluftreinigungsvorrichtung kann an dem Aufbau und/oder dem Fahrzeugrahmen befestigt sein. Insbesondere kann es sich bei dem Straßenfahrzeug um einen leichten Lieferwagen handeln, wie er im Zustelldienst eingesetzt wird.

Gemäß einer besonderen Ausführungsform ist vorgesehen, dass die Aufnahme der Umgebungsluftreinigungsvorrichtung zwischen zumindest zwei Längsprofilen und/oder Querprofilen des Fahrzeugrahmens erfolgt, wobei es sich bei einem der Querprofile beispielsweise auch um einen Unterfahrschutz an einem hinteren Fahrzeugende handeln kann. Insbesondere kann die Umgebungsluftvorrichtung in Fahrzeughochrichtung im Wesentlichen bündig mit einer Oberseite der o. g Rahmenprofile abschließen, sodass in Fahrzeughochrichtung eine optimale Bauraumausnutzung erreicht wird.

Die Umgebungsluftreinigungsvorrichtung kann hinsichtlich ihrer Abmessungen in Höhenrichtung derart dimensioniert sein, dass diese die jeweiligen Rahmenprofile nicht überragt. Die Erfindung ist jedoch nicht hierauf beschränkt; es sind auch Ausführungsformen möglich, gemäß denen die Umgebungsluftreinigungsvorrichtung eine größere Höhe aufweist als das jeweilige Rahmenprofil.

"Freie Abströmzone" bedeutet, dass in Durchströmungsrichtung hinter dem Filterelement der Umgebungsluftreinigungsvorrichtung keine die Strömung störenden Einbauten vorliegen, da eine rein passive Durchströmung (Verwirbelungen) ansonsten durch den erhöhten Druckverlust nicht mehr möglich sein könnte.

Das Filterelement kann ein- oder mehrteilig ausgebildet sein und insbesondere mehrere Filtereinheiten, insbesondere Filterbälge und/oder Filtertaschen, aufweisen. Es können auch mehrere Subfilterelemente vorgesehen sein, die zu einem Filterelement verbunden werden.

Als Nebeneffekt wirkt die Umgebungsluftreinigungsvorrichtung bei einer Anordnung hinter der Hinterachse eines Fahrzeugs auch steinschlagvermindernd und trägt so zur Sicherheit nachfolgender Fahrzeuge bei. Aufgrund der sehr einfach gehaltenen Konstruktionsweise der Umgebungsluftreinigungsvorrichtung können auch bestehende Fahrzeugflotten problemlos damit nachgerüstet werden.

Um einen Eindruck von der hervorragenden Wirksamkeit eines solchen erfindungsgemäßen Fahrzeugs mit Umgebungsluftreinigungsvorrichtung zu bekommen, wurden Strömungssimulationen unter folgenden Randbedingungen durchgeführt:
- Partikelkonzentration in der Testluft mit 25 µg/m³ PM2,5, 50 µg/m³ PM10,
- Höhe des Filterelements 300 mm,
- Breite des Filterelements 600 mm,
- Abscheidegrad für PM2,5 und PM10 80 %, cellulosebasiertes Filtermedium, Dicke des Filtermediums 0,7 mm, Luftdurchlässigkeit 700 l/m²s mit 9 m² effektiver Filterfläche.

Basierend auf diesen Annahmen ergibt sich, dass ein solches Filterelement bei passiver Durchströmung mehr PM10-Partikel abscheidet, als der Dieselmotor erzeugt. Dabei wurde eine PM10-Emission von 6 mg/km angenommen. Somit lassen sich die Emissionen auf den Wert eines Elektrofahrzeugs reduzieren. Durch Einbau aktiver Komponenten, wie beispielsweise Lüfter, lässt sich die Abscheideleistung bei niedrigen Geschwindigkeiten noch verbessern.

In einer besonders bevorzugten Ausführungsform kann das zumindest eine Filterelement der Umgebungsluftreinigungsvorrichtung in Fahrzeuglängsrichtung bzw. "horizontal" durchströmt werden, d. h. es ist so in Bezug zur Umgebungsluftreinigungsvorrichtung verbaut, dass keine Strömungsumlenkungen nötig sind, die einen nachteiligen Druckverlust erzeugen.

Gemäß einer bevorzugten Ausführungsform kann vorgesehen sein, dass die Umgebungsluftreinigungsvorrichtung zumindest eine Luftfördereinrichtung zur Unterstützung der Durchströmung aufweist, insbesondere zumindest einen Ventilator oder Gebläse, wobei bevorzugt die Luftfördereinrichtung in Bezug zu dem zumindest einen Filterelement saugend angeordnet ist. Bei der Luftfördereinrichtung kann es sich beispielsweise um einen Axialventilator oder ein Axialgebläse handeln. Die Luftfördereinrichtung kann insbesondere einen elektrischen Antrieb aufweisen, der elektrisch mit einem Bordnetz des Straßenfahrzeugs verbunden ist. Axialgebläse oder -ventilatoren werden aufgrund ihrer vorteilhafterweise in Axialrichtung gesehen geringen Montagemaße bevorzugt eingesetzt. Die Erfindung erfasst daher ausdrücklich sowohl passiv durchströmte Umgebungsluftreinigungsvorrichtungen als auch aktiv durchströmte Umgebungsluftreinigungsvorrichtungen mit zumindest einer Luftfördereinrichtung.

Die Umgebungsluftreinigungsvorrichtung ist oberhalb einer durch eine Drehachse eines Radpaares der Hinterachse definierten Querachse angeordnet.

Ferner ist möglich und sinnvoll, wenn im Unterbodenbereich des Straßenfahrzeugs eine Aufnahmevorrichtung vorliegt, mit der, direkt oder indirekt, die Umgebungsluftreinigungsvorrichtung verbunden ist. Bei der Aufnahmevorrichtung kann es sich um beliebige, dem Fachmann geeignet erscheinende Befestigungsmittel handeln, etwa Spannbänder, Schraubverbindungen, Schnellverschlussmittel und dergleichen. Es kann insbesondere das zumindest eine Filterelement, das einen Rahmen aufweisen kann, direkt mit der Aufnahmevorrichtung verbunden sein.

Es kann vorteilhaft vorgesehen sein, dass in Fahrtrichtung gesehen hinter der Umgebungsluftreinigungsvorrichtung keine fahrzeuggebundenen Einrichtungen angeordnet sind, die eine Abströmung von der Umgebungsluftreinigungsvorrichtung behindern. Alternativ hierzu kann/können in Fahrtrichtung gesehen hinter der Umgebungsluftreinigungsvorrichtung angeordnete Fahrzeugteile, etwa eine Querverstrebung, ein Stoßfänger, eine Verkleidung und dergleichen, zumindest eine Durchtrittsöffnung aufweisen, um eine ungehinderte Abströmung von der Umgebungsluftreinigungsvorrichtung zu ermöglichen.

Ferner kann sich die Umgebungsluftreinigungsvorrichtung über einen wesentlichen Teil einer Fahrzeugbreite im Fahrzeugheck erstrecken. Bevorzugt erstreckt sich die Umgebungsluftreinigungsvorrichtung über zumindest 30 % der Fahrzeugbreite, stärker bevorzugt über zumindest 40 %. Die Umgebungsluftreinigungsvorrichtung kann sich in Fahrzeugquerrichtung sogar vollständig über einen zwischen den Rädern der Hinterachse liegenden Bereich erstrecken, wobei die Anordnung hinter der Hinterachse unbenommen bleibt. Durch eine solche Anordnung wird das eingesetzte Filterelement optimal ausgenutzt, indem dessen Anordnung auf die Strömungsverhältnisse am Unterboden abgestimmt wird; in den durch die Räder strömungsmäßig verdeckten Bereichen herrscht eine deutlich geringere Strömungsgeschwindigkeit als im "Mittelbereich".

Auch im Falle einer Anordnung außerhalb des Bereichs der Fahrzeugachsen ist es bevorzugt, dass sich die Umgebungsluftreinigungsvorrichtung in Fahrzeugquerrichtung über einen wesentlichen Teil einer Fahrzeugbreite erstreckt, bevorzugt zumindest über eine Breite, die dem Abstand zwischen zwei Rädern einer Fahrzeugachse entspricht.

Es ist bevorzugt, die Umgebungsluftreinigungsvorrichtung bzw. deren Lufteinlass in möglichst geringer Höhe anzuordnen, da regelmäßig mit zunehmender Höhe die Schadstoffkonzentrationen, insbesondere die Partikelkonzentration, abnimmt. Damit kann die absolut pro gefahrene Strecke abgeschiedene Partikelmenge erhöht werden. Ferner ist es bevorzugt, die Umgebungsluftreinigungsvorrichtung außerhalb der Karosserie des Fahrzeugs anzuordnen. Die Form eines Fahrzeugs ist regelmäßig dafür ausgelegt, die Strömung bestmöglich um das Fahrzeug herumzuführen. Eine Anordnung der Umgebungsluftreinigungsvorrichtung außerhalb der Karosserie kann daher zur Optimierung der durch die Umgebungsluftreinigungsvorrichtung führbaren Luftmenge beitragen, insbesondere wenn die Umgebungsluftreinigungsvorrichtung bzw. Strömungsleitmittel wie bevorzugt so ausgestaltet sind, dass ein Teil der um das Fahrzeug strömenden Luft gezielt zu der Umgebungsluftreinigungsvorrichtung gelenkt wird.

Es ist gemäß einer weiteren Ausführungsform ferner möglich, dass die Umgebungsluftreinigungsvorrichtung zumindest ein Aufnahmegehäuse aufweist, in dem das zumindest eine Filterelement aufgenommen ist, das zumindest eine Eintrittsöffnung und eine Austrittsöffnung aufweist und das mit dem Straßenfahrzeug verbunden ist. Die Eintrittsöffnung(en) kann in bestimmungsgemäßer Fahrtrichtung vorne und/oder seitlich, oben oder unten am Aufnahmegehäuse vorgesehen sein. Bei einer seitlichen Anordnung an einer oberen, unteren oder seitlichen Wand ist eine Anordnung der Eintrittsöffnung(en) im in Fahrtrichtung gesehen vorderen Bereich dieser Wandungen bevorzugt, um die Strömung mit geringem konstruktiven Aufwand innerhalb der Umgebungsluftreinigungsvorrichtung führen zu können. Die seitliche Anordnung ist insbesondere bei Montagepositionen von Vorteil, die nicht direkt im Fahrtwind stehen, wie unter oder hinter dem Fahrzeug. Ferner ist es möglich und sinnvoll, wenn die Umgebungsluftreinigungsvorrichtung zumindest zwei Filterelemente aufweist, die in Fahrzeugquerrichtung nebeneinander angeordnet sind, insbesondere mit einem vorbestimmten Abstand dazwischen. Selbstverständlich können auch mehr als zwei Filterelemente zum Einsatz kommen; dies kann insbesondere sinnvoll sein, wenn das zumindest eine Filterelement aus mehreren Filtereinheiten bzw. Subfilterelementen zusammengesetzt ist.

Das Aufnahmegehäuse kann eine titandioxidhaltige Beschichtung auf seiner Außenseite aufweisen zur fotokatalytischen Oxidation von NO2 zu NO3.

Zwischen den Filterelementen kann auch ein Abstand vorgesehen sein, der beispielsweise zur Durchführung von Kabeln, Hydraulikleitungen und/oder zur Aufnahme von Rahmenbauteilen und dergleichen dienen kann. Ferner kann es sinnvoll sein, zwei getrennte Filterelemente einzusetzen, da ein großes Filterelement, das sich über einen wesentlichen Teil der Fahrzeugbreite erstreckt, schwierig zu produzieren ist und zudem ein großes Gewicht aufweist, was den Austausch erschwert. Bei einer Ausführungsform mit zwei oder mehr getrennten Filterelementen kann zudem vorgesehen sein, dass jedes Filterelement ein eigenes Gehäuse aufweist, das seinerseits mit dem Unterbodenbereich verbunden ist.

Gemäß einer noch weiteren Ausführungsform kann die Umgebungsluftreinigungsvorrichtung zumindest ein Strömungsleitelement aufweisen, das bevorzugt an einer vorderen, äußeren und in Fahrzeughochrichtung verlaufenden Seitenkante der Umgebungsluftreinigungsvorrichtung angeordnet ist. Hierdurch kann das Filterelement vergleichsweise klein ausgeführt werden und der Staudruck vor dem Filterelement erhöht werden, sodass auch bei geringeren Fahrgeschwindigkeiten eine Durchströmung möglich wird. In einer bevorzugten Ausführungsform sind sowohl an den vorderen Seitenkanten (vertikal) der Umgebungsluftreinigungsvorrichtung als auch an der unteren Querkante (horizontal) solche Strömungsleitelemente angeordnet, wobei es besonders vorteilhaft ist, wenn sich das untere Strömungsleitelement möglichst nah bis zur Fahrbahnoberfläche erstreckt. Alternativ oder zusätzlich kann/können Strömungsleitelement(e) an einer Flanke des Fahrzeugs, etwa in einem zwischen Hinterachse und Vorderachse liegenden Längsbereich, angeordnet sein. Hierdurch kann ein Tunneleffekt der Unterströmung des Fahrzeugs erreicht werden, sodass ein möglichst großer Anteil der Unterströmung durch die Umgebungsluftreinigungsvorrichtung durchtritt. Die flankenseitigen Strömungsleitelemente können etwa auch als Verkleidungs-/Beplankungsteile bzw. als Teil eines seitlichen Unterfahrschutzes ausgeführt sein. Das zumindest eine Strömungsleitelement kann alternativ oder zusätzlich auch in Fahrtrichtung hinten angeordnet sein, etwa an einer hinteren, oberen in Fahrzeugquerrichtung verlaufenden Seitenkante der Umgebungsluftreinigungsvorrichtung. Es können auch mehr als zwei Strömungsleitelemente zum Einsatz kommen. Es ist hierbei ausdrücklich möglich, dass auch abströmseitig, d. h. auf der Reinseite, zumindest ein Strömungsleitelement vorliegt. Eine Anordnung des Strömungsleitelements in Fahrtrichtung hinten ist vorteilhaft, um vor Fahrzeugteilen, etwa eine Querverstrebung, ein Stoßfänger, eine Verkleidung, die ansonsten eine Abströmung behindern könnten, eine ungestörte Abströmung zu ermöglichen, d. h., eben die freie Abströmzone zu ermöglichen.

Bei dem Strömungsleitelement kann es sich etwa um eine Strömungsleitplatte handeln, die bevorzugt unter einem Winkel zur Fahrzeughoch-, Längs- oder Querachse verkippt angeordnet ist. Die Strömungsleitplatte kann beispielsweise als Strömungsleitblech oder Gummiformteil, -profil und/oder -lippe ausgebildet sein. Ein verkipptes bzw. winklig angeordnetes Strömungsleitelement kann besonders vorteilhaft eingesetzt werden, um die Strömungsführung durch die Umgebungsluftreinigungsvorrichtung an fahrzeuggebundene Einbauten bzw. Fahrzeugteile (z. B. etwa ein Rahmenprofil, eine Querverstrebung, ein Unterfahrschutz, einen Stoßfänger, ein sonstiges Verkleidungsteil) anzuordnen. Die Erfindung ist hinsichtlich der Werkstoffauswahl des Strömungsleitelements selbstverständlich nicht auf die vorgenannten Materialien beschränkt, sondern umfasst auch andere geeignete Werkstoffe, insbesondere auch andere Kunststoffe.

Optional kann auch eine Schaltbarkeit des Strömungsleitelements vorgesehen sein, wobei es sich um ein verstellbares Strömungsleitblech handeln kann, das zwischen verschiedenen Positionen verstellbar ist, um die Luftstromführung zu beeinflussen. Das Strömungsleitblech ist zwischen einer Außerfunktionsposition und einer Funktionsposition verstellbar, wobei in der Funktionsposition die Luftströmung zu dem Filterelement in der Feinstaub-Absaugvorrichtung geleitet wird. In der Außerfunktionsposition kann dagegen die Luftzufuhr zu dem Filterelement unterbunden sein. Bevorzugt kann das mindestens eine Strömungsleitelement so ausgestaltet sein, dass im Fahrbetrieb der lokale Luftdruck im Einlassbereich der Umgebungsluftreinigungsvorrichtung erhöht und/oder im Auslassbereich gesenkt wird. Hierdurch kann die Abscheideleistung pro Fahrstrecke verbessert werden.

In einer bevorzugten Ausführungsform kann vorgesehen sein, dass das Aufnahmegehäuse der Umgebungsluftreinigungsvorrichtung einen der Eintrittsöffnung strömungsmäßig nachgeschalteten Einlaufkanalbereich aufweist, der die Eintrittsöffnung fluidisch mit dem zumindest einen Filterelement verbindet, wobei bevorzugt eine Längserstreckung des Einlaufkanalbereichs derart ausgebildet ist, dass sich die Eintrittsöffnung zwischen einem durch die Hinterachse geführten Radpaar befindet. Hierdurch wird vorteilhaft erreicht, dass der Bereich der Eintrittsöffnung nicht unmittelbar in dem Spritzbereich der Räder der Hinterachse liegt, was die Anforderungen an eine Wasserabscheidung der Umgebungsluftreinigungsvorrichtung deutlich verringert. In Zusammenhang mit einem wie hierin beschrieben stabilisierten Filterelement (innere/äußere Faltenstabilsierungsmittel) kann ggf. sogar auf einen separaten Wasserabscheider verzichtet werden.

Gemäß einer vorteilhaften Weiterbildung kann vorgesehen sein, dass die Umgebungsluftreinigungsvorrichtung wenigstens einen in Fahrtrichtung gesehen dem zumindest einen Filterelement vorgeschalteten Vor- bzw. Grobabscheider, insbesondere ein Abscheidegitter, Abscheidenetz, Prallbleche und/oder ein Vorabscheidervlies, aufweist. Es kann hierbei vorgesehen sein, dass der Vor- bzw. Grobabscheider, insbesondere das Abscheidegitter, mit dem zumindest einen Strömungsleitelement verbunden ist.

Der Vor- bzw. Grobabscheider, insbesondere das Abscheidegitter, ist in erster Linie dazu vorgesehen, zu verhindern, dass Fremdkörper, welche aufgrund ihrer kinetischen Energie das Filterelement schädigen könnten, in das Filterelement gelangen. Das Abscheidegitter kann zu diesem Zweck grobmaschig ausgeführt sein und eine Maschenweite von 1 mm bis 4 mm aufweisen, bevorzugt 6 mm bis 8 mm, sodass durch dieses nur ein vernachlässigbar kleiner zusätzlicher Druckverlust entsteht. Solche Gitter sind beispielsweise als Aluminiumstreckgitter äußerst kostengünstig verfügbar. In einer weiteren Ausführungsform kann jedoch auch vorgesehen sein, dass der Vor- bzw. Grobabscheider eine Filtrationsfunktion erfüllt und alternativ oder zusätzlich eine Vlieslage aufweist. Ein Vorabscheidervlies kann insbesondere rohseitig auf dem Filterelement angeordnet werden, beispielsweise verklebt, oder in einem vorbestimmten Abstand zum Filterelement vorliegen, wobei eine Anordnung direkt auf dem Filterelement den Vorteil hat, dass das Vorabscheidervlies beim Service zusammen mit dem Filterelement gewechselt wird. Vorteilhafterweise hat das Vorabscheidervlies zudem wasserabscheidende und drainierende Eigenschaften und ist daher in der Lage, das "Hauptfilterelement" zu schützen.

Gemäß einer vorteilhaften Weiterbildung kann vorgesehen sein, dass die Umgebungsluftreinigungsvorrichtung wenigstens einen in Fahrtrichtung gesehen dem zumindest einen Filterelement vorgeschalteten, bevorzugt einem Grobabscheider vor- oder nachgeschalteten, Wasserabscheider zur Abscheidung von Regenwasser aufweist. Der Wasserabscheider kann bevorzugt einen Lamellenabscheider und/oder eine hydrophobe, insbesondere hydrophob imprägnierte Abscheidelage, und/oder insbesondere schließbare Klappen oder Lamellen aufweisen. Der Wasserabscheider kann insbesondere abhängig von einem Regensensorsignal oder Scheibenwischersignal zugeschaltet oder in den Strömungsweg gestellt werden. Im Falle von schließbaren Klappen oder Lamellen können diese abhängig von einem Regensensorsignal verstellt werden. Ein Scheibenwischersignal kann bei Kopplung der Umgebungsluftreinigungsvorrichtung mit dem Straßenfahrzeug problemlos aus einem Datenbus des Fahrzeugs extrahiert werden und beschreibt einen Betriebsparameter eines Scheibenwischers (z. B. Ein/Aus, Wischgeschwindigkeit).

Ein weiterer Aspekt der Erfindung betrifft eine Verwendung einer Umgebungsluftreinigungsvorrichtung in einem erfindungsgemäßen Straßenfahrzeug, insbesondere einem Lastkraftwagen, insbesondere einem leichten Lastkraftwagen, die insbesondere zur Entfernung von Stäuben, insbesondere Feinstaub, und/oder Gasen aus der Umgebungsluft ausgebildet ist. Die Umgebungsluftreinigungsvorrichtung weist zumindest ein Filterelement auf und ist quer zu einer Fahrzeuglängsachse in einem Außenbereich des Straßenfahrzeugs anordenbar. Die erfindungsgemäße Umgebungsluftreinigungsvorrichtung ist dazu ausgebildet, in einem Unterbodenbereich an einem Fahrzeugheck so angeordnet zu werden, dass zumindest das zumindest eine Filterelement in einem Montagezustand in Fahrtrichtung gesehen hinter einer Hinterachse des Straßenfahrzeugs vorliegt. Sie ist in einem durch einen Fahrzeugrahmen bereitgestellten Bauraum aufnehmbar, sodass sie in Fahrzeuglängsrichtung durchströmbar ist, wobei in einem Montagezustand insbesondere in Fahrtrichtung hinter der Umgebungsluftreinigungsvorrichtung eine freie Abströmzone vorliegt. Gemäß einer vorteilhaften Weiterbildung kann vorgesehen sein, dass an der Umgebungsluftreinigungsvorrichtung eine Montageöffnung für das Filterelement vorgesehen ist, die insbesondere seitlich, vertikal oder in bestimmungsgemäßer Fahrtrichtung hinten angeordnet ist. Hierbei ist bevorzugt, dass die Umgebungsluftreinigungsvorrichtung Haltemittel für das mindestens eine Filterelement umfasst, die formschlüssig eine Bewegung des Filterelementes in Fahrtrichtung unterbinden, um bei Bremsungen und Auffahrsituationen ein Auslösen des Filterelementes zu verhindern. Die Haltemittel sind bevorzugt so ausgestaltet, dass der Öffnungsquerschnitt innerhalb der Haltemittel kleiner ist als der Querschnitt des Filterelements quer zur Fahrtrichtung.

Ferner kann vorgesehen sein, dass die Umgebungsluftreinigungsvorrichtung einen Schubladenmechanismus und/oder lösbare Rastverbindungen für die Montage des Filterelements in der Umgebungsluftreinigungsvorrichtung aufweist. So kann eine einfach wartbare Umgebungsluftreinigungsvorrichtung bereitgestellt werden.

Der Begriff Filterelement ist wiederum so zu verstehen, dass dieses ein- oder mehrteilig ausgebildet sein kann und insbesondere mehrere Filtereinheiten, insbesondere Filterbälge und/oder Filtertaschen, aufweisen kann. Es können auch mehrere Subfilterelemente vorgesehen sein, die zu einem Filterelement verbunden werden.

Die Vorteile einer derartigen Anordnung wurden bereits im Zusammenhang mit dem erfindungsgemäßen Straßenfahrzeug beschrieben.

Die Höhe des zumindest einen Filterelements kann beispielsweise in einem Bereich zwischen 100 mm und 600 mm, bevorzugt zwischen 150 mm und 500 mm, liegen.

Die Parameter, die den größten Einfluss auf die Abscheideleistung der Umgebungsluftreinigungsvorrichtung haben, sind die Höhe des Filterelements und der Durchströmungswiderstand des Filterelements, der wesentlich durch das Filterkonzept bestimmt wird, und nicht etwa die Eintrittsgeschwindigkeit. Es muss daher eine bestimmte Mindesthöhe eingehalten werden, um eine zufriedenstellende Abscheideleistung zu erreichen.

Gemäß einer weiteren Weiterbildung wird vorgeschlagen, das Filterelement mit einer Anströmfläche von zumindest 100 mm x 250 mm auszuführen, bevorzugt zumindest 150 mm x 500 mm. Alternativ oder zusätzlich kann vorgesehen sein, dass das Volumen des zumindest einen Filterelements zumindest 6,5 I beträgt, bevorzugt zumindest 20 I. Die Netto-Filterfläche des zumindest einen Filterelements soll zumindest 3 m², bevorzugt zumindest 7 m², am meisten bevorzugt zumindest 15 m², betragen. Bei Einsatz eines teiloder vollsynthetischen Filtermediums anstelle eines cellulosebasierten können auch geringere Filterflächen ausreichend sein.

Das Filterelement kann alternativ oder zusätzlich mehrere Faltenstabilisierungsmittel aufweisen, die bei einer Ausführungsform mit gefaltetem Filterbalg diesen stützen und in einem lateralen Abstand von nicht mehr als 150 mm zu einander vorliegen.

Die erfindungsgemäß vorgesehene Abstützung des Filterbalgs durch Faltenstabilisierungsmittel trägt zweierlei Problemen Rechnung: Erstens erfährt das Filterelement aufgrund der Fahrgeschwindigkeit auch im Unterbodenbereich einen sehr hohen Staudruck und zweitens ist das Filterelement Nässeeinwirkungen ausgesetzt, dies nicht nur durch Niederschlag, sondern auch durch Einwirkungen beim Reinigen des Fahrzeugs, etwa durch einen Hochdruckreiniger.

Überraschenderweise lassen sich o. g Herausforderungen durch eine Abstützung der Falten des Filterbalgs durch Faltenstabilisierungsmittel in einem Maximalabstand von 150 mm elegant lösen, sodass das Filterelement sowohl eine Anströmung bei Vₘₐₓ, z. B. 180 km/h, bevorzugt > 200 km/h, schadenfrei übersteht als auch, dass es externe Reinigungseinwirkungen durch Hochdruckreiniger nicht schädigen können. Ohne wirksame Faltenstabilisierungsmittel droht einem Filterelement mit klassischem Balgaufbau bei derartiger mechanischer Einwirkung ein Paketieren der Falten, d. h. ein Verschluss der Faltenzwischenräume, was zu einem schlagartigen Verlust an Filterfläche führt und somit unmittelbar zu einem korrespondierenden Anstieg des Durchströmungswiderstandes und somit entsprechenden Abfall des Volumenstroms.

Der erfindungsgemäße Bereich des lateralen Abstands der Faltenstabilisierungsmittel von nicht größer als 150 mm kann vorteilhafterweise nach unten hin derart begrenzt sein, dass der Abstand bevorzugt größer ist als 15 mm, bevorzugt größer als 30 mm, da ansonsten ein ungünstiges Verhältnis von durch die Faltenstabilisierungsmittel verdeckten Filterbalgbereichen und frei durchströmbaren Bereichen vorläge.

Vorteilhaft ermöglicht ein Filterelement mit derartigen Faltenstabilisierungsmitteln, dass eine damit ausgestattete Umgebungsluftreinigungsvorrichtung ggf. ohne separaten Spritzwasserschutz (Klappen, Rollläden o. Ä.) betrieben werden kann, da das Filterelement selbst eine so große Stabilität aufweist, dass eine Wasserschlageinwirkung nicht zu einer Beschädigung des Filterelements führt. Die Umgebungsluftreinigungsvorrichtung weist daher eine nur geringe Komplexität auf und kann überraschend kostengünstig bereitgestellt werden.

Es sind verschiedene Faltenstabilisierungsmittel möglich, die diese Funktion erfüllen.

In einer besonderen Ausführungsform kann vorgesehen sein, dass die Faltenstabilisierungsmittel jeweils parallel zueinander, bevorzugt in Faltenquerrichtung, verlaufen. Andere Winkelorientierungen sind selbstverständlich auch möglich, etwa diagonal. Es können auch zwei Gruppen von Faltenstabilisierungsmitteln vorgesehen sein, die jeweils parallel laufen und sich kreuzen. Ein paralleler Verlauf hat den Vorteil, dass sich dieser bei der Filterelementfertigung problemlos durch kontinuierliche Fertigungsprozesse realisieren lässt. Eine Anordnung der Faltenstabilisierungsmittel in Faltenquerrichtung ist zudem besonders vorteilhaft, da hierbei die kleinstmögliche Stützlänge zwischen zwei benachbarten Falten realisiert ist, was zu einer besonders wirksamen Faltenstützung führt.

In einer weiteren Ausführungsform kann vorgesehen sein, dass die Faltenstabilisierungsmittel zumindest in Fahrtrichtung hinten, d. h. auf einer Reinluftseite des Filterelements, bevorzugt zusätzlich in Fahrtrichtung vorne, d. h. auf einer Rohluftseite des Filterelements, vorliegen. Durch eine solche Anordnung zumindest auf der Reinseite wird zuverlässig verhindert, dass die Falten unter den o. g. mechanischen Belastungen kompaktieren. Eine Anordnung zusätzlich auf der Rohseite erhöht die Belastbarkeit weiter, wobei jedoch der größere Beitrag zur Filterelementsteifigkeit durch die reinseitigen Faltenstabilisierungsmittel geliefert wird.

Ferner kann vorgesehen sein, dass das Filtermedium eine Biegeeigensteifigkeit von zumindest 1 Nm², bevorzugt zumindest 2 Nm², aufweist. Gemeint ist hiermit eine intrinsische Biegesteifigkeit des Filtermediums, d. h. in einem unverarbeiteten/ungefalteten Zustand.

Gemäß einer noch weiteren Ausführungsform können die Faltenstabilisierungsmittel zumindest ein inneres Faltenstabilisierungsmittel umfassen, das in die Faltenzwischenräume zumindest teilweise eingreift, bevorzugt die Faltenzwischenräume ausfüllt. Bei dem inneren Faltenstabilisierungsmittel kann es sich beispielsweise um eine durchlaufende Kleberaupe und/oder einen eingreifenden Stabilisierungskamm handeln. Unter einer "durchlaufenden Kleberaupe" wird vorliegend eine Kleberaupe verstanden, die bereits vor dem Falten auf das flächige Filtermedium aufgebracht wird und somit nach dem Falten komplett von Faltengrund zur Faltenspitze verläuft, d. h. eben durchlaufend ausgebildet ist. Alternativ oder zusätzlich hierzu kann zumindest ein äußeres Faltenstabilisierungsmittel vorgesehen sein, das zumindest mit jeweils benachbarten Faltenspitzen verbunden ist. Das äußere Faltenstabilisierungsmittel kann zumindest eine zumindest mit den Faltenspitzen verbundene Kleberaupe, zumindest einen zumindest mit den Faltenspitzen verbundenen Faden und/oder zumindest ein Stabilisierungsband bzw. -rippe und/oder zumindest ein Stützgitter aufweisen. Die äußeren Faltenstabilisierungsmittel können ferner stoffschlüssig mit den Faltenspitzen verbunden sein, was zu einer optimalen Krafteinleitung von den Faltenspitzen in die äußeren Faltenstabilisierungsmittel beiträgt. Eine derartige stoffschlüssige Verbindung kann beispielsweise durch Verschweißen des äußeren Faltenstabilisierungsmittels mit dem Filterbalg, insbesondere den Faltenspitzen, erfolgen, insbesondere durch Spiegelschweißen. Im Gegensatz zu den inneren Faltenstabilisierungsmitteln handelt es sich bei der Kleberaupe der äußeren Faltenstabilisierungsmittel nicht um eine durchlaufende Kleberaupe, sondern um eine oberflächlich mit den Faltenspitzen verbundene.

Die Kleberaupen der inneren und/oder äußeren Faltenstabilisierungsmittel können eine Breite in einem Bereich von 0,5 mm bis 12 mm, bevorzugt 1 mm bis 8 mm, aufweisen. In einer besonderen Ausführungsform sind die Falten des Filterbalgs "auf Block gefaltet", sodass der Faltenabstand in etwa der doppelten Breite der durchlaufenden Kleberaupen (als innere Faltenstabilisierungsmittel) entspricht. Als Material für die Kleberaupen kommt etwa ein Schmelzkleber in Betracht.

Alternativ oder zusätzlich kann das Filtermedium des Filterelements der Umgebungsluftreinigungsvorrichtung eine oder mehrere Prägelinien aufweisen, die bevorzugt in Faltenquerrichtung verlaufen. Durch derartige Prägelinien wird die Steifigkeit der Falten des Filterbalgs durch eine Erhöhung des Flächenträgheitsmoments zusätzlich erhöht, was zusätzlich dazu beiträgt, ein Kollabieren/Kompaktieren der Falten unter Druckeinwirkung zu verhindern.

In einer besonders bevorzugten Ausführungsform kann vorgesehen sein, dass das Filterelement der Umgebungsluftreinigungsvorrichtung eine Kollapsdruckfestigkeit von zumindest 15 mbar, bevorzugt zumindest 25 mbar, aufweist.

Das zumindest eine Filterelement kann ein ein- oder mehrlagiges Filtermedium aufweisen, das zumindest eine Partikelfilterlage, insbesondere eine Celluloselage und/oder eine Kunstfaserlage, insbesondere ein Kunstfaservlies, und/oder zumindest eine Gasfiltrationslage, insbesondere mit einer Aktivkohleschüttung als Aktivmaterial, hat. Die Gasfiltrationslage kann mit entsprechenden Aktivmaterialien versehen sein, die eine Ad-/Absorption verschiedener gesundheitsschädlicher Gase aus der Umgebungsluft ermöglichen, beispielsweise Ozon, Schwefeldioxid, Stickoxide und Kohlenstoffmonoxid. Hierzu können auch verschiedene Aktivmaterialien zum Einsatz kommen. Die Aktivkohle kann auch imprägniert sein, um die Abscheidung bestimmter Gase zu verbessern; beispielsweise unter Verwendung von Kupfer oder Kupferverbindungen, um die Absorption von NOₓ zu erhöhen. Durch Einsatz einer derartigen Aktivkohleschüttung kann die Absorptionsleistung des/der eingesetzten Filterelement(e) so eingestellt werden, dass die Umgebungsluftreinigungsvorrichtung in etwa so viel NOₓ absorbiert, wie das Straßenfahrzeug, an dem sie montiert ist, emittiert. Es kann bevorzugt katalytische Aktivkohle verwendet werden, die beispielsweise zur Umwandlung von Stickoxid in weniger schädliche Stoffe, wie beispielsweise Stickstoff und Kohlendioxid, verwendbar ist.

Die Umgebungsluftreinigungsvorrichtung sollte einen Druckverlust bei einer Anströmung des Filterelements mit Luft bei Normbedingungen mit 1,5 m/s von höchstens 200 Pa, bevorzugt bei 2,5 m/s von höchstens 250 Pa, aufweisen.

Die erfindungsgemäße Umgebungsluftreinigungsvorrichtung funktioniert in einer Ausführungsform nach dem Prinzip der passiven Durchströmung durch den durch die Fahrgeschwindigkeit erzeugten Staudruck. Da das Problem der exzessiven Luftverschmutzung in erster Linie in Ballungszentren existiert, in denen die Fahrgeschwindigkeit üblicherweise unter 40 km/h liegt, sollte der Druckverlust der Umgebungsluftreinigungsvorrichtung so gering sein, dass diese bei den üblichen bei innerstädtischen Geschwindigkeiten auftretenden Staudrücken noch durchströmt wird. So beträgt der Staudruck bei einer Fahrgeschwindigkeit von 30 km/h etwa 40 Pa und bei 40 km/h etwa 75 Pa.

Ferner kann das zumindest eine Filterelement ein gefaltetes Filterelement sein, das dazu ausgebildet ist, so verbaut zu werden, dass seine Falten in Fahrzeuglängsrichtung verlaufen, da hierdurch die Faltentaschen optimal angeströmt werden können. Die Faltenhöhen des Filterelements betragen vorteilhaft zumindest 100 mm, besonders vorteilhaft über 200 mm; hierüber kann in einem kompakten Bauraum eine vergleichsweise große Filterfläche untergebracht werden. Alternativ kann es sich bei dem Filterelement um ein sogenanntes Kompaktelement handeln. Unter "Kompaktelement" wird ein Filterelement verstanden, das einen Filtermediumkörper aufweist, der aus abwechselnd aufgewickelten Well- und Flachlagen aus Filtermedium besteht, wobei diese untereinander flächig verklebt sind. Die durch die Welllagen gebildeten Strömungskanäle sind wechselseitig stirnseitig verschlossen, etwa durch einen Klebstoffpfropf.

Ferner kann vorgesehen sein, dass es sich bei dem Filterelement um ein Taschenfilterelement handelt, das zumindest drei Filtertaschen, bevorzugt vier oder mehr Filtertaschen, aufweist. Alternativ oder zusätzlich kann auch ein V-Filter-Element eingesetzt werden, das wenigstens drei V-förmige Filtereinheiten aufweist. Solche Filterelementtypen sind im Bereich der Ansaugfilter für Gasturbinen und/oder HVAC-Systeme am Markt in vielen Größenbereichen verfügbar.

Alternativ oder zusätzlich kann es sich bei dem Filterelement um ein Filterelement handeln, das zumindest der Partikelfilterklasse M6 nach DIN EN 779 entspricht.

In einer weiteren Ausführungsform kann das Filterelement eine variable Faltenhöhe aufweisen, bevorzugt eine über eine Fahrzeughochachse gesehen variable Faltenhöhe. Hierüber kann etwa eine Anpassung der Außenkontur des Filterelements an einen Bauraum am Fahrzeugheck erreicht werden, beispielsweise eine Anpassung an eine Kontur zumindest eines Fahrzeugteils im Unterbodenbereich, insbesondere einer Radaufhängung und/oder zumindest eines Rads und/oder zumindest eines Zusatzaggregats und/oder einer Auspuffanlage und/oder einer Fahrbatterie. Die Faltenhöhe kann insbesondere aber in Fahrzeuglängsrichtung gesehen zum Fahrzeugheck hin abnehmen, sodass das Filterelement respektive die Umgebungsluftreinigungsvorrichtung bei Steigungsfahrten nicht in Kontakt mit der Fahrbahn gerät.

Die in Zusammenhang mit der erfindungsgemäßen Umgebungsluftreinigungsvorrichtung offenbarten Merkmale können in beliebiger Kombination auch mit dem erfindungsgemäßen Straßenfahrzeug kombiniert werden und umgekehrt.

Schließlich wird ein Filterelement für die erfindungsgemäße Umgebungsluftreinigungsvorrichtung beansprucht. Die im Bezug zum erfindungsgemäßen Straßenfahrzeug und zur erfindungsgemäßen Umgebungsluftreinigungsvorrichtung genannten Merkmale und Vorteile sind hierauf in beliebiger Kombination übertragbar.

Weiter wird nachfolgend ein Verfahren zur Reduzierung der Gesamtemission eines Straßenfahrzeugs mit mindestens einer vorbestimmten Emissionskomponente beschrieben. Das Verfahren sieht vor, dass eine insbesondere erfindungsgemäße Umgebungsluftreinigungsvorrichtung in einer vorbestimmten Montageposition an einem Straßenfahrzeug montiert wird, wobei die Umgebungsluftreinigungsvorrichtung für die Montage in der Montageposition so ausgelegt ist, dass im Fahrbetrieb durch die Umgebungsluft, in welcher vorbestimmte Grenzwerte erreicht oder überschritten sind und die im Bereich der Montageposition der Umgebungsluftreinigungsvorrichtung zugeführt wird, durch die Umgebungsluftreinigungsvorrichtung mindestens die Menge der durchschnittlichen Emission der mindestens einen Emissionskomponente abgeschieden wird. Ein durch dieses Verfahren erhältliches Fahrzeug ist ebenfalls Teil der vorliegenden Erfindung.

Beispielsweise wird dabei zunächst eine Ermittlung der durchschnittlichen Emission des Straßenfahrzeugs von mindestens einer Emissionskomponente vorgenommen, insbesondere von Partikeln und/oder Stickstoff-Oxiden, insbesondere pro Kilometer, insbesondere im Stadtbetrieb. Hierzu können entweder Fahrbetriebsmessungen oder Durchschnittswerte herangezogen werden, beispielsweise Herstellerangaben.

Insbesondere anschließend kann bevorzugt eine Montageposition der Umgebungsluftreinigungsvorrichtung am Fahrzeug bestimmt werden. Weiter bevorzugt kann aufgrund der teilweise vom Abstand von der Fahrbahnoberfläche abhängigen Konzentrationen von Emissionskomponenten wie Feinstaub, die Luftbelastung, d. h. die Konzentration der mindestens einen Emissionskomponente in der Montageposition, insbesondere in deren Abstand zur Fahrbahnoberfläche, ermittelt werden, beispielsweise durch Absolutmessung oder durch eine Vergleichsmessung mit Messungen in Normmesshöhe, in welcher amtliche Messungen vorgenommen werden.

Ferner kann die Montageposition so gewählt werden, dass insbesondere unterstützt durch Strömungsleitmittel mindestens ein Teil der Emissionen des Straßenfahrzeugs der Umgebungsluftreinigungsvorrichtung zugeführt wird, beispielsweise die Staubemissionen von Bremsscheiben und/oder Reifen oder die Abgasemissionen aus dem Abgasstrang einer Brennkraftmaschine des Straßenfahrzeugs. Hierdurch wird die Abscheideleistung durch Wahl einer Montageposition mit lokal erhöhter Konzentration von Emissionskomponenten erhöht. Der Abstand zwischen dem Auslass der Abgasanlage und der Umgebungsluftreinigungsvorrichtung beträgt dabei bevorzugt 5 cm bis 50 cm, besonders bevorzugt 5 cm bis 30 cm.

Bevorzugt ist die Montageposition so gewählt, dass die Umgebungsluftreinigungsvorrichtung in einer Höhe von kleiner 2 m, bevorzugt kleiner 1,5 m, besonders bevorzugt kleiner 1 m, von der Fahrbahnoberfläche gemessen angeordnet ist. Bevorzugt ist die Montageposition ferner an einer Stelle gewählt, an welcher eine Konzentrationserhöhung von im Bereich der Fahrbahndecke befindlichem Staub durch Aufwirbelung durch das erfindungsgemäße Fahrzeug vorhanden ist. Dies trifft insbesondere zu auf die Positionen in einem Heckbereich im Bereich eines hinteren Stoßfängers oder integriert in einen hinteren Stoßfänger, auf dem Dach, an einem Anhänger oder in einem Unterbodenbereich an einem Fahrzeugheck in Fahrtrichtung gesehen hinter einer Hinterachse des Straßenfahrzeugs.

### Kurze Beschreibung der Zeichnungen

Weitere Vorteile und zweckmäßige Ausführungen sind den weiteren Ansprüchen, der Figurenbeschreibung und den Zeichnungen zu entnehmen.

Es zeigen:
- Fig. 1: in schematischer Darstellung ein erfindungsgemäßes Straßenfahrzeug in Seitenansicht;
- Fig. 2: eine Detailansicht des erfindungsgemäßen Straßenfahrzeugs in einer ersten, breiten Ausführungsform der Umgebungsluftreinigungsvorrichtung;
- Fig. 3: eine Detailansicht des erfindungsgemäßen Straßenfahrzeugs in einer weiteren Ausführungsform mit schmaler Umgebungsluftreinigungsvorrichtung;
- Fig. 4: in schematischer Darstellung ein erfindungsgemäßes Straßenfahrzeug in einer weiteren Ausführungsform in Seitenansicht;
- Fig. 5: eine isometrische Darstellung eines Details des erfindungsgemäßen Straßenfahrzeugs gemäß einer weiteren Ausführungsform;
- Fig. 6: eine isometrische Darstellung eines Taschenfilters, wie er in der erfindungsgemäßen Umgebungsluftreinigungsvorrichtung einsetzbar ist;
- Fig. 7: eine isometrische Darstellung eines V-Filters, wie er in der erfindungsgemäßen Umgebungsluftreinigungsvorrichtung einsetzbar ist;
- Fig. 8: eine isometrische Ansicht eines Fahrzeugrahmens eines erfindungsgemäßen Straßenfahrzeugs mit Umgebungsluftreinigungsvorrichtung;
- Fig. 9: eine weitere isometrische Ansicht eines Fahrzeugrahmens eines erfindungsgemäßen Straßenfahrzeugs mit Umgebungsluftreinigungsvorrichtung;
- Fig. 10: eine Seitenansicht eines Fahrzeugrahmens eines erfindungsgemäßen Straßenfahrzeugs mit Umgebungsluftreinigungsvorrichtung;
- Fig. 11: eine weitere isometrische Ansicht eines Fahrzeugrahmens eines erfindungsgemäßen Straßenfahrzeugs mit Umgebungsluftreinigungsvorrichtung;
- Fig. 12 und 13: eine schematische Darstellung eines anströmseitigen Bereichs einer Umgebungsluftreinigungsvorrichtung;
- Fig. 14: eine isometrische Darstellung einer Modifikation für eine erfindungsgemäße Umgebungsluftreinigungsvorrichtung; und
- Fig. 15: eine isometrische Darstellung einer weiteren Modifikation für eine erfindungsgemäße Umgebungsluftreinigungsvorrichtung.

### Ausführungsform(en) der Erfindung

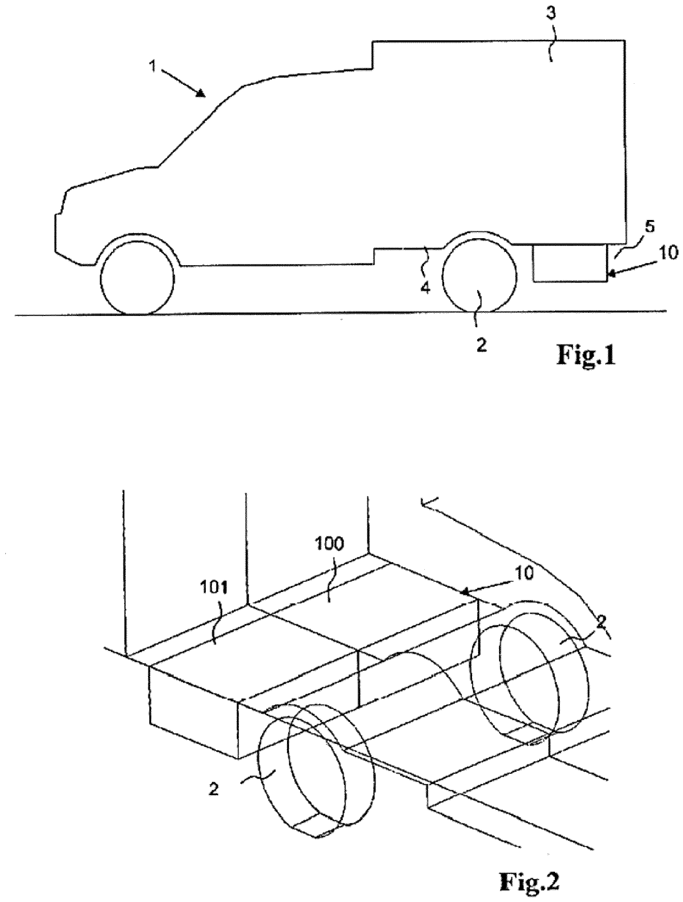

In Fig. 1 ist eine Ausführungsform eines erfindungsgemäßen Straßenfahrzeugs 1 in einer Seitenansicht gezeigt. Es handelt sich hierbei um einen leichten Lieferwagen mit Kofferaufbau 3, der etwa einen Elektroantrieb aufweist. Am Unterboden 4 ist am Fahrzeugheck hinter der Hinterachse bzw. den Hinterrädern 2 eine Umgebungsluftreinigungsvorrichtung 10 angeordnet, hinter der eine freie Abströmzone 5 vorliegt, in der keine fahrzeuggebundenen Einbauten o. Ä. vorliegen, die eine Abströmung vom Filterelement behindern könnten. In Höhenrichtung ist die Umgebungsluftreinigungsvorrichtung 10 im Wesentlichen oberhalb einer durch die Hinterachse definierten Querachse angeordnet. Anders als bei aus dem Stand der Technik bekannten fahrzeuggebundenen Luftreinigern wird durch die Anordnung an dieser Position weder die Außenform des Fahrzeugs negativ beeinflusst noch ergeben sich schwerwiegende aerodynamische Nachteile. Am Unterboden des Fahrzeugs herrscht im Fahrbetrieb eine ausreichend hohe Strömungsgeschwindigkeit vor, um die Umgebungsluftreinigungsvorrichtung 10 auch bei typischen Fahrgeschwindigkeiten im städtischen Bereich zuverlässig und ohne Lüfter, d. h. passiv, zu durchströmen.

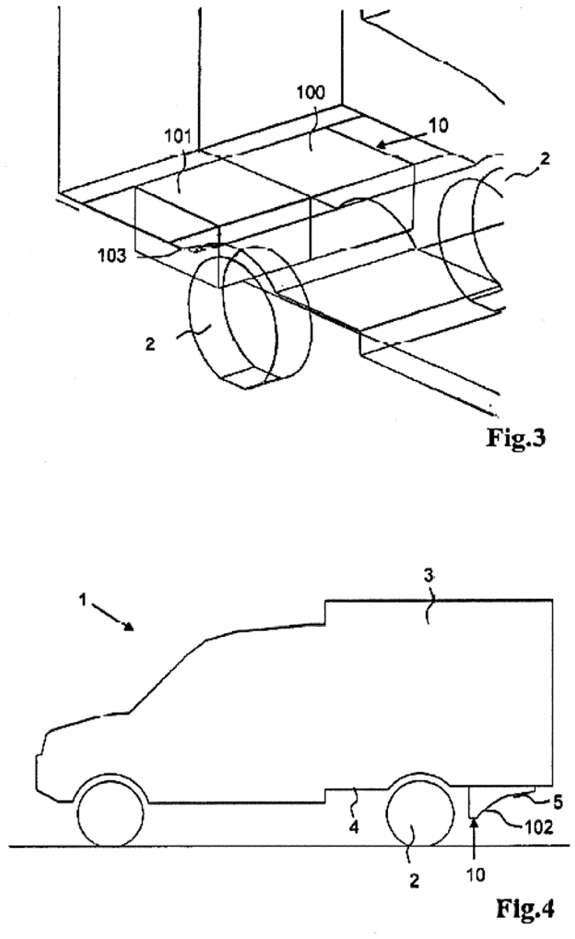

Die Umgebungsluftreinigungsvorrichtung 10 weist als funktionellen Kern zwei Filterelemente 100,101 auf, was in Fig. 2 und Fig. 3 dargestellt ist. Die Filterelemente 100,101 sind in Fahrzeugquerrichtung nebeneinander angeordnet, was sowohl für den Servicefall (Gewicht des Elements) als auch bei der Produktion Vorteile hat. In den gezeigten Ausführungsformen befindet sich zwischen den beiden Filterelementen 100,101 kein Spalt; in einer nicht gezeigten Ausführungsform der Erfindung kann jedoch an dieser Position ein Spalt vorgesehen werden, um Leitungen, Rahmenteile oder dergleichen durchzuführen.

Bei der in Fig. 2 gezeigten Ausführungsform erstreckt sich die Umgebungsluftreinigungsvorrichtung 10 bzw. deren Filterelemente 100,101 über die komplette Breite des Fahrzeugs, während in Fig. 3 sich diese nur in einem Bereich zwischen den Rädern 2 der Hinterachse erstreckt. Obgleich über ein größeres Filterelement eine höhere Abscheideleistung erzielt werden kann, wird die schmale Ausführungsform der Fig. 3 als ausreichend erachtet, da in dem Bereich hinter den Rädern 2 ohnehin eine deutlich geringere Anströmgeschwindigkeit zu erwarten ist als in dem freien Mittelbereich zwischen den Hinterrädern 2.

Sinnvollerweise kann die Umgebungsluftreinigungsvorrichtung 10 aus Fig. 3 mit Strömungsleitelementen kombiniert werden, die einen effektiven Anströmquerschnitt erhöhen und somit dazu beitragen können, den Staudruck auf der Rohseite der Filterelemente 100,101 zu erhöhen, sodass bereits geringere Fahrgeschwindigkeiten zu einer Durchströmung ausreichen. Ein Strömungsleitelement kann beispielsweise an der äußeren, vorderen in Hochrichtung verlaufenden Seitenkante 103, vorteilhaft auch an der dieser Kante abgewandten zweiten Seitenkante, angeordnet werden.

In Fig. 4 ist eine weitere Ausbildung des erfindungsgemäßen Straßenfahrzeugs 1 gezeigt, wobei die Umgebungsluftreinigungsvorrichtung 10 bzw. deren Filterelement zum Fahrzeugheck hin eine abnehmende Höhe hat, was vorteilhaft ist, um bei Steigungsfahrten nicht störend zu wirken; diese zum Fahrzeugheck weisende Kante ist mit dem Bezugszeichen 102 bezeichnet. Eine solche Form der Filterelemente 100,101 kann beispielsweise durch eine variable Faltenhöhe erreicht werden, wobei die Falten hier in Fahrzeuglängsrichtung verlaufen. Es sind natürlich noch andere Filterelementbauformen denkbar, die insbesondere an eine Unterbodenkontur angepasste Formen haben, um den Bauraum zwischen dort vorhandenen Einbauten (beispielsweise Batterien, Leitungen, Kabel, Achsteile) optimal ausnutzen zu können, dies ist jedoch nicht figurativ gezeigt.

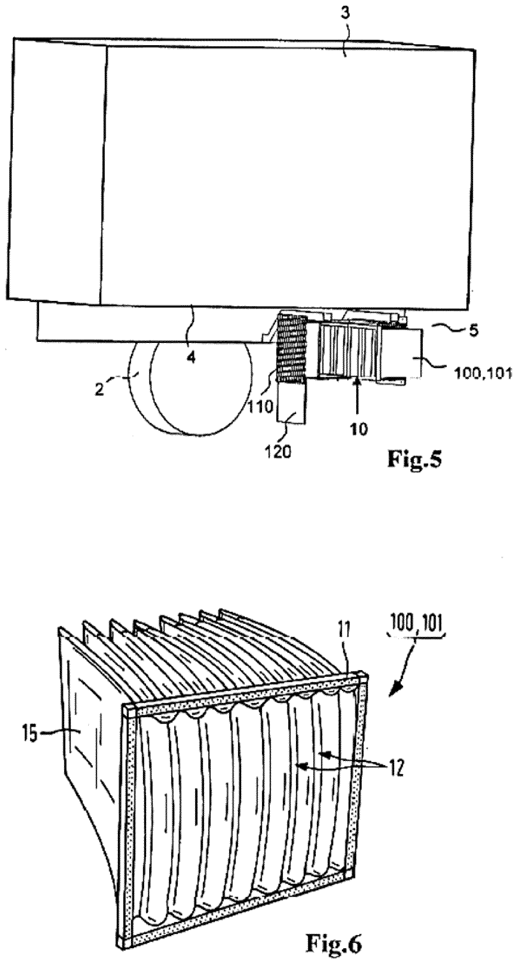

In Fig. 5 ist ein Detail des erfindungsgemäßen Straßenfahrzeugs 1 im Bereich des Unterbodens 4 dargestellt, wobei ein linkes Hinterrad ausgeblendet ist. Die Umgebungsluftreinigungsvorrichtung 10 umfasst gemäß dieser Ausführungsform neben dem Filterelement 100,101 eine Strömungsleitplatte 120, die an einer unteren, in Fahrzeugquerrichtung verlaufenden Seitenkante der Umgebungsluftreinigungsvorrichtung 10 bzw. des Filterelementes 100,101 angeordnet ist. Durch die Strömungsleitplatte 120 wird, wie vorbeschrieben, der effektive Anströmquerschnitt erhöht. Ferner ist dem Filterelement 100,101 in Fahrtrichtung ein Grobabscheider 110 vorgeschaltet, der hier als Gitter 110 ausgebildet ist. Der Grobabscheider 110 verhindert, dass gröbere Partikel, wie z. B. Steine, Insekten oder sonstige Fremdkörper, in das Filterelement 100,101 gelangen und dieses aufgrund ihrer kinetischen Energie beschädigen. In der gezeigten Ausführungsform ist zudem ein weiteres Gitter an einer dem Filterelement 100,101 in Strömungsrichtung nachgeordneten Position, d. h. in Fahrzeuglängsrichtung hinter dem Filterelement 100,101, angeordnet. Dieses Gitter hat im Wesentlichen die gleiche technische Wirkung; so kann insbesondere verhindert werden, dass aufgewirbelte Fremdkörper in das Filterelement 100,101 gelangen.

Ferner ist in der Fig. 5 eine geeignete Halterung der Umgebungsluftreinigungsvorrichtung 10 gezeigt, die über in Fahrzeugquerrichtung verlaufende U-Träger verfügt, an denen ein Gehäuse für das Filterelement 100,101 befestigt ist. Bei dem Gehäuse handelt es sich um eine Blechkonstruktion, insbesondere aus Stahlblech, die aus einem flächigen Ausgangsmaterial durch einige wenige Umformschritte und Bohrungen herstellbar ist. Alternativ kann das Filterelement 100,101 auch, wie bereits ausgeführt, direkt mit dem Unterboden 4 verbunden sein.

In Fig. 6 ist schematisch ein Taschenfilterelement 100,101 gezeigt, wie es in der Umgebungsluftreinigungsvorrichtung 10 des Straßenfahrzeugs 1 der Fig. 5 eingesetzt werden kann. Das Taschenfilterelement 100,101 hat einen umlaufenden rechteckigen Rahmen 11, an dem eine Mehrzahl, hier acht, Filtertaschen 15 befestigt ist. Die Filtertaschen 15 bestehen aus einem geeigneten Filtermedium und werden durch Vernähen aus dem Filtermedium gebildet. Geeigneterweise ist das Taschenfilterelement so in der Umgebungsluftreinigungsvorrichtung 10 anzuordnen, dass die Filtertaschen 15 mit ihren Hohlräumen 12, die die jeweiligen Anströmseiten bilden, in Fahrtrichtung nach vorne weisen. Um ein zu starkes Aufblähen der Filtertaschen 15 durch die Anströmung zu verhindern, können einander gegenüberliegende flächige Filtermediumabschnitte mit einer geeigneten Fadenlänge vernäht sein. Ansonsten ist der Aufbau solcher Filterelemente dem Fachmann bekannt. Taschenfilterelemente sind beispielsweise aus dem Bereich der Ansaugfilter für Gasturbinen oder dem HVAC-Bereich am Markt in einer Vielzahl von Abmessungen verfügbar. Das gezeigte Taschenfilterelement 100,101 hat die Abmessungen 287 mm x 592 mm x 365 mm.

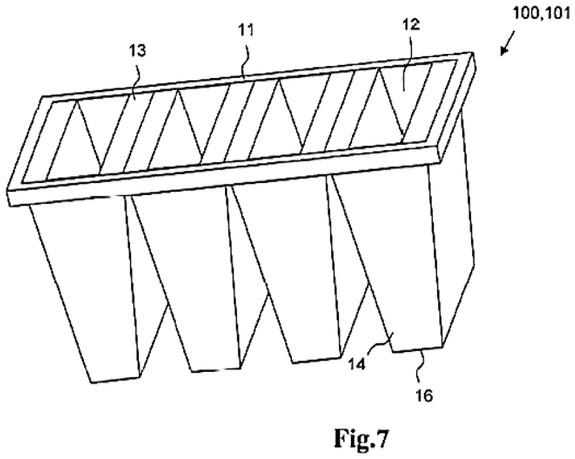

Ferner ist in Fig. 7 ein V-Filter-Element 100,101 gezeigt, das vier in einer V-Form zueinander angeordnete Filtereinheiten aufweist, die jeweils durch zwei Flachfilterelemente 13 gebildet werden, wobei die Flachfilterelemente 13 beispielsweise einen gefalteten Filterbalg aufweisen. Das gezeigte V-Filter-Element 100,101 umfasst daher acht Flachfilterelemente 13. Das V-Filter-Element 100,101 verfügt über einen Rahmen 11, an dem die V-förmigen Filtereinheiten befestigt sind. An der dem Rahmen 11 abgewandten Unterseite sind jeweils zwei Flachfilterelemente, die eine V-förmige Filtereinheit bilden, jeweils fluiddicht miteinander verbunden. Die das 'V' begrenzenden Seitenflächen sind jeweils durch eine flächige Abdeckung 14 fluiddicht verschlossen. Zum Verbau gilt bereits in Bezug auf Fig. 6 Ausgeführtes: Das V-Filter-Element 100,101 wird geeigneterweise so in die Umgebungsluftreinigungsvorrichtung 10 eingesetzt, dass die Hohlräume 12 zur Anströmseite weisen, d. h. beim Verbau in dem erfindungsgemäßen Straßenfahrzeug 1 in Fahrtrichtung. Die Abmessungen des V-Filter-Elements betragen 287 mm x 592 mm x 300 mm. Die Faltenhöhen der jeweiligen Flachfilterelemente 13 betragen in der gezeigten Ausführungsform 25 mm.

Sowohl für das in Fig. 6 gezeigte Taschenfilterelement als auch für das in Fig. 7 gezeigte V-Filter-Element gilt, dass von diesen eine geeignete Anzahl nebeneinander angeordnet werden kann, um eine Umgebungsluftreinigungsvorrichtung 10 mit einer hinreichenden Breite zu schaffen. Beide Varianten sind in den zuvor und nachfolgend beschriebenen Ausführungsformen von Straßenfahrzeugen oder Umgebungsluftreinigungsvorrichtungen verwendbar.

Als Filtermaterialien können vollsynthetische Vliese, Glasfaser- oder Cellulosemedien sowie Kombinationen hieraus eingesetzt werden, die zusätzlich auch noch über eine Elektretwirkung verfügen können bzw. entsprechend ausgerüstet sind, um ein gutes Verhältnis aus Druckverlust und Abscheideleistung zu erzielen. Vorzugsweise besitzen diese Medien hydrophobe Eigenschaften und zeichnen sich durch eine gute Wasserstabilität aus. Es kann auch ein Filtermedium eingesetzt werden, das vollständig aus Cellulose besteht. Der bevorzugte Berstdruck der Filterelemente soll insbesondere über 500 Pa, bevorzugt über 1.000 Pa betragen. Die bevorzugte Staubkapazität der Filterelemente beträgt bevorzugt zumindest 300 g, bevorzugt mehr als 700 g.

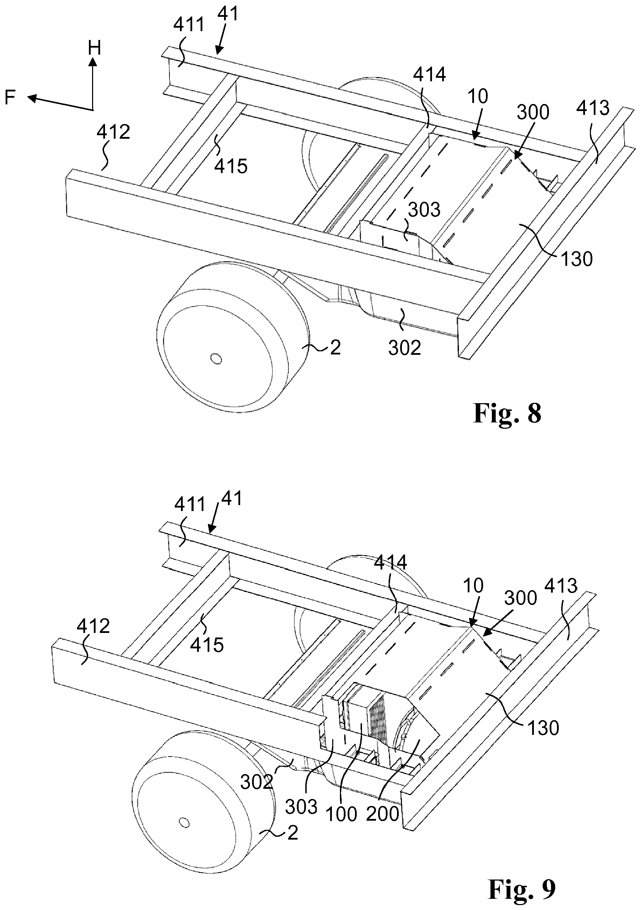

In Fig. 8 bis Fig. 11 ist ein Detail des erfindungsgemäßen Kraftfahrzeugs 1, das in Fig. 1 und Fig. 4 schematisch gezeigt ist, dargestellt. Es ist hierbei nur der Fahrzeugrahmen 41 gezeigt, der als Leiterrahmen ausgebildet ist und als Hauptträgerprofile über zwei Längsprofile 411,412 verfügt. Die Längsprofile 411,412 sind in vorbestimmten Abständen mit Querprofilen 413,414,415 verbunden, um einen mechanisch belastbaren und verwindungssteifen Rahmen 41 zu erhalten. Zwischen den beiden Längsprofilen 411,412 ist nun die Umgebungsluftreinigungsvorrichtung 10 aufgenommen, in diesem Bauraum sind bei Fahrzeugen mit Fahrzeugrahmen 41, beispielsweise Lastkraftwagen, insbesondere leichten Lastkraftwagen, ansonsten keine produktiven Einrichtungen vorhanden, der Bauraum ist meist ungenutzt. In der gezeigten Ausführungsform wird der Bauraum nach hinten durch das Querprofil 413 begrenzt, bei dem es sich um einen Unterfahrschutz handelt. Um nach hinten (siehe Pfeil F, der die Fahrtrichtung bezeichnet) eine ungestörte Abströmung zu ermöglichen, hat die Umgebungsluftreinigungsvorrichtung 10 das um die Querachse geneigte Strömungsleitelement 130, das die abströmende Luft leicht nach unten ablenkt (siehe Pfeil H, der die Fahrzeughochachse bezeichnet). Das Aufnahmegehäuse 300 der Umgebungsluftreinigungsvorrichtung weist Seitenwände 303 und eine Bodenwanne 302 auf.

Fig. 9 ist eine erste Ausbruchsdarstellung, wobei Teile des Längsprofils 412, der Seitenwand 303 und des Strömungsleitelements 130 ausgeblendet sind, um ins Innere der Umgebungsluftreinigungsvorrichtung 10 sehen zu können. In Fahrtrichtung vorne ist zunächst innerhalb des Aufnahmegehäuses 300 ein Filterelement 100 angeordnet, auf dem ein Vorvlies befestigt sein kann, das eine vorabscheidende und wasserabscheidende sowie drainierende Funktion hat. Bei dem Filterelement 100 kann es sich um ein beliebiges hierin beschriebenes Filterelement handeln, insbesondere, aufgrund des angestrebten geringen Druckverlustes, um ein gefaltetes Element mit einer Faltenhöhe von zumindest 100 mm. In Fahrtrichtung weiter hinten sind zwei Lüfter 200 vorgesehen, die in Bezug zu dem Filterelement 100 im Saugbetrieb operabel sind.

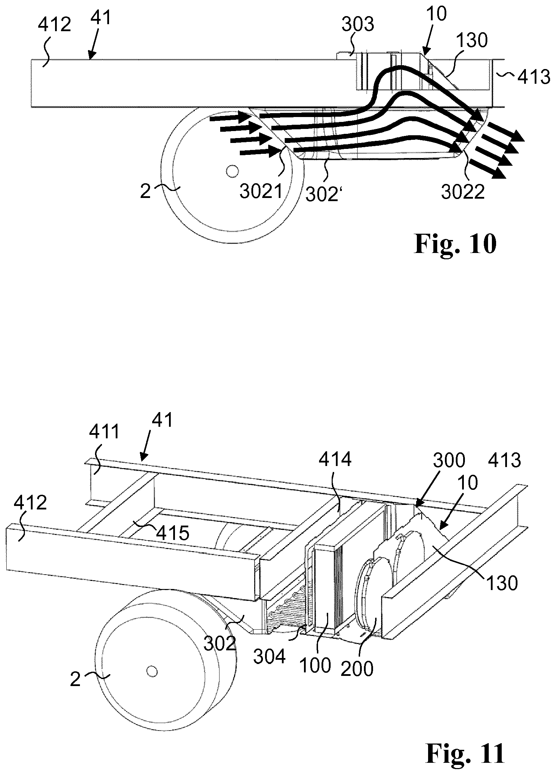

In der Seitenansicht der Fig. 10 ist die Bodenwanne 302 zu erkennen, die sich in Fahrzeughochrichtung H ein Stück weit bis unter die Längsprofile 411,412 erstreckt. In der Bodenwanne 302 des Aufnahmegehäuses 300 ist in Fahrtrichtung vorne eine Lufteintrittsöffnung 3021 und hinten eine Luftaustrittsöffnung 3022 vorgesehen, durch die die gereinigte Luft, abgelenkt durch das Strömungsleitelement 130, die Umgebungsluftreinigungsvorrichtung 10 wieder verlässt. Der Luftweg wird durch die schwarzen Pfeile dargestellt. Die Bodenwanne 302 schützt Filterelement 100 und Lüfter 200 vor Spritzwassereinflüssen. Das Aufnahmegehäuse 300, in der gezeigten Ausführungsform ein Teil der Bodenwanne 302, ist an seinem in Fahrtrichtung F hinteren Ende abgeschrägt, um bei Rampenabfahrten möglichst nicht zu stören. In der Seitenansicht ist ferner zu erkennen, dass die Umgebungsluftreinigungsvorrichtung 10 oberhalb einer durch die Drehachse des Radpaares der Hinterachse definierten Querachse angeordnet ist. Zudem ist der Einlaufkanalbereich 302' zu erkennen, der sich von der Eintrittsöffnung 3021 bis zum Filterelement 100,101 erstreckt. Die Längserstreckung des Einlaufkanalbereichs 302' ist so dimensioniert, dass die Eintrittsöffnung 3021 zwischen den Rädern des Radpaares der Hinterachse vorliegt und sich so nicht im Spritzbereich der Räder befindet. Der Einlaufkanalbereich wird vorliegend zumindest teilweise durch die Bodenwanne 302 ausgebildet.

In Fig. 11 ist schließlich eine weitere Ausbruchsdarstellung gezeigt, in der als weiteres Element des Aufnahmegehäuses 300 eine Versteifungswand 304 zu erkennen ist, die dem Filterelement 100 in Fahrtrichtung F vorgelagert ist. Die Versteifungswand hat große Durchbrüche und könnte daher auch als Versteifungsrahmen bezeichnet werden. Diese ist kraftleitend mit der Bodenwanne 302 und dem Strömungsleitelement 130 verbunden, um ein steifes Aufnahmegehäuse 300 zu bilden.

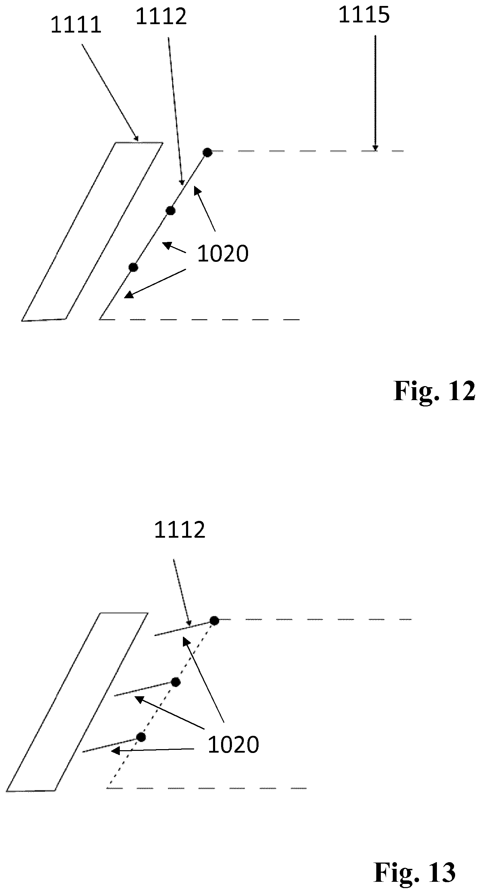

Fig. 12 und 13 zeigen eine schematische Darstellung einer möglichen Ausgestaltung eines anströmseitigen Bereichs einer erfindungsgemäßen Umgebungsluftreinigungsvorrichtung. Als Schutzstufe 1112 sind hier bevorzugt eine oder mehrere motorisch betätigte Mittel zum Verhindern des Eindringens von Tieren wie Nagern, Vögeln o. Ä., wie beispielsweise ein Gitter, umfasst.

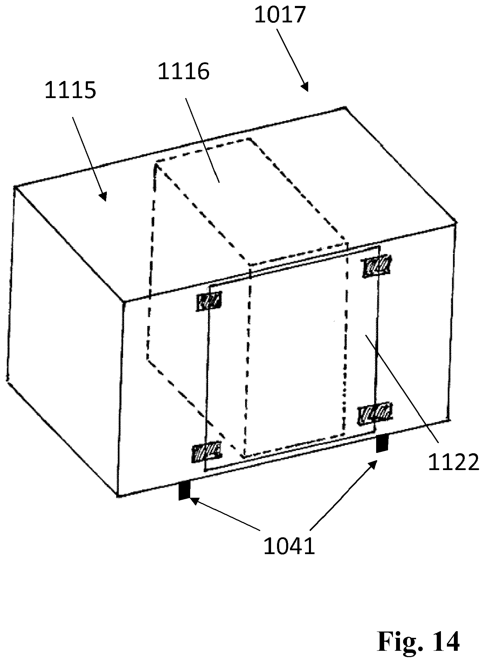

Fig. 14 zeigt eine isometrische Darstellung einer Modifikation 1017 für eine erfindungsgemäße Umgebungsluftreinigungsvorrichtung. Gemäß dieser Modifikation umfasst das Gehäuse 1115 eine Wartungsöffnung mit einer verschließbaren Wartungsklappe 1122, die einen Wechsel des Filterelements 1116 erlaubt. Eine Anordnung der Wartungsklappe 1122 an einer unteren, der Fahrbahn zugewandten Wand des Gehäuses 1115 ist dabei denkbar oder vorteilhaft.

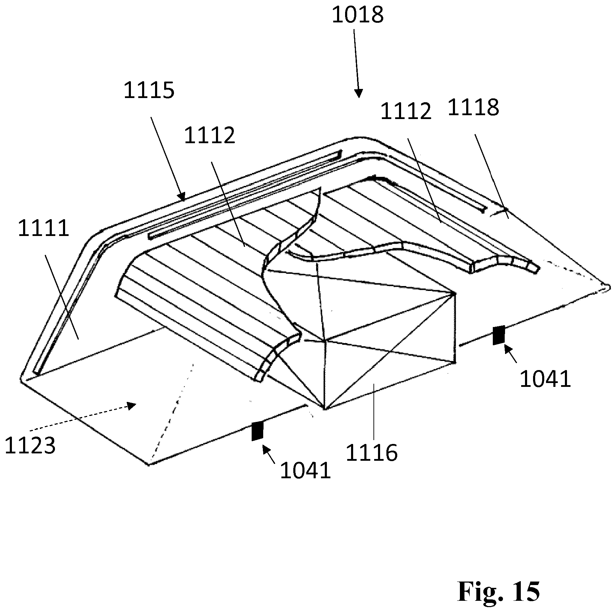

Fig. 15 zeigt eine isometrische Darstellung einer weiteren Modifikation 1018 für eine erfindungsgemäße Umgebungsluftreinigungsvorrichtung. Hierbei ist als Schutzstufe 1112 ein anströmseitiger erster motorisch beweglicher Rollladen 1124 und/oder ein zweiter motorisch beweglicher Rollladen 1125 im Gehäuse 1115 angeordnet, welche Einlass 1111 bzw. Auslass 1118 verschließen können. Wie bei den vorgenannten Klappen ist die Steuerung dieser Rollläden bzw. Klappen bevorzugt so ausgelegt, dass die Rollläden oder Klappen bei abgestelltem Fahrzeug und/oder ab einer vorbestimmten Strömungsgeschwindigkeit (Fahrgeschwindigkeit) wie beispielsweise 100 km/h und/oder bei Regen, Schnee, oder sonstigem temporären Wassereintrag (wie in der Waschstraße, beim Betätigen der Scheibenwaschanlage o. Ä.) geschlossen sind oder werden. Eine funktionale Verbindung mit der in Bezug auf Fig. 14 gezeigten Modifikation ist derart denkbar, dass die Wartungsklappe 1122 nur öffenbar ist, wenn die Klappen oder Rollläden offen sind, wobei die Klappen oder Rollläden (d. h. verallgemeinert der Einlass 1111 und der Auslass 1118) jeweils geschlossen sind, wenn das Fahrzeug nicht in Betrieb ist, und geöffnet sind, wenn das Fahrzeug in Betrieb ist. Selbstverständlich sind die genannten Funktionen auch unabhängig voneinander vom Betriebszustand des Fahrzeugs abhängig steuerbar.

## Patentansprüche

1. Straßenfahrzeug (1), insbesondere Personenkraftwagen oder Lastkraftwagen, insbesondere leichter Lastkraftwagen, insbesondere angetrieben mit einer Brennkraftmaschine und/oder Elektroantrieb, das eine Umgebungsluftreinigungsvorrichtung (10, 1017, 1018) aufweist, die insbesondere zur Entfernung von Stäuben, insbesondere Feinstaub, und/oder Gasen aus der Umgebungsluft ausgebildet ist, wobei die Umgebungsluftreinigungsvorrichtung (10, 1017, 1018) zumindest ein Filterelement (100,101) aufweist und quer zu einer Fahrzeuglängsachse in einem Außenbereich des Straßenfahrzeugs (1) angeordnet ist,
**dadurch gekennzeichnet, dass**
die Umgebungsluftreinigungsvorrichtung (10, 1017, 1018) in einem Unterbodenbereich (4) an einem Fahrzeugheck so angeordnet ist, dass zumindest das zumindest eine Filterelement (100,101) hinter einer Hinterachse des Straßenfahrzeugs (1) vorliegt, wobei die Umgebungsluftreinigungsvorrichtung (10, 1017, 1018) in Fahrzeuglängsrichtung durchströmbar ist und in Fahrtrichtung hinter der Umgebungsluftreinigungsvorrichtung (10, 1017, 1018) insbesondere eine freie Abströmzone (5) vorliegt, und wobei die Umgebungsluftreinigungsvorrichtung (10, 1017, 1018) in einem durch einen Fahrzeugrahmen (41) bereitgestellten Bauraum aufgenommen ist, wobei die Umgebungsluftreinigungsvorrichtung (10, 1017, 1018) oberhalb einer durch eine Drehachse eines Radpaares (2) der Hinterachse definierten Querachse angeordnet ist.

2. Straßenfahrzeug (1) nach Anspruch 1,
**dadurch gekennzeichnet, dass**
die Umgebungsluftreinigungsvorrichtung (10, 1017, 1018) zwischen zumindest zwei Längsprofilen (411, 412) und/oder Querprofilen (413, 414, 415) des Fahrzeugrahmens (41) aufgenommen ist.

3. Straßenfahrzeug nach Anspruch 1 oder 2, **dadurch gekennzeichnet, dass** die Umgebungsluftreinigungsvorrichtung (10, 1017, 1018) zumindest eine Luftfördereinrichtung (200) zur Unterstützung der Durchströmung aufweist, insbesondere zumindest einen Ventilator oder ein Gebläse, wobei bevorzugt die Luftfördereinrichtung (200) in Bezug zu dem zumindest einen Filterelement (100,101) saugend angeordnet ist.

4. Straßenfahrzeug (1) nach einem der Ansprüche 1 bis 3,
**dadurch gekennzeichnet, dass**
im Unterbodenbereich (4) des Straßenfahrzeugs (1) eine Aufnahmevorrichtung vorliegt, mit der, direkt oder indirekt, die Umgebungsluftreinigungsvorrichtung (10, 1017, 1018) verbunden ist.

5. Straßenfahrzeug (1) nach einem der Ansprüche 1 bis 4,
**dadurch gekennzeichnet, dass**
die Umgebungsluftreinigungsvorrichtung (10, 1017, 1018) sich in Fahrzeugquerrichtung über einen wesentlichen Teil einer Fahrzeugbreite erstreckt, bevorzugt zumindest über 30 % der Fahrzeugbreite, besonders bevorzugt zumindest 40 % der Fahrzeugbreite.

6. Straßenfahrzeug (1) nach einem der Ansprüche 1 bis 5,
**dadurch gekennzeichnet, dass**
- die Umgebungsluftreinigungsvorrichtung (10, 1017, 1018) zumindest ein Aufnahmegehäuse (300) aufweist, in dem das zumindest eine Filterelement (100,101) aufgenommen ist, das zumindest eine Eintrittsöffnung (3021) und eine Austrittsöffnung (3022) aufweist und mit dem Straßenfahrzeug (1) verbunden ist und/oder
- die Umgebungsluftreinigungsvorrichtung (10, 1017, 1018) zumindest zwei Filterelemente (100,101) aufweist, die insbesondere in Fahrzeugquerrichtung nebeneinander angeordnet sind.

7. Straßenfahrzeug (1) nach einem der vorhergehenden Ansprüche,
**dadurch gekennzeichnet, dass**
die Umgebungsluftreinigungsvorrichtung (10, 1017, 1018) zumindest ein Strömungsleitelement (120, 130) aufweist, das bevorzugt an einer vorderen, äußeren und in Fahrzeughochrichtung verlaufenden Seitenkante (103) der Umgebungsluftreinigungsvorrichtung (10, 1017, 1018) angeordnet ist und/oder an einer Flanke des Straßenfahrzeugs (1) in einem zwischen Hinterachse und Vorderachse liegenden Längsbereich und/oder an einer vorderen, in Fahrzeugquerrichtung verlaufenden unteren Kante der Umgebungsluftreinigungsvorrichtung (10, 1017, 1018) und/oder an einer hinteren, oberen in Fahrzeugquerrichtung verlaufenden Seitenkante der Umgebungsluftreinigungsvorrichtung (10, 1017, 1018) angeordnet ist.

8. Straßenfahrzeug (1) nach Anspruch 6 oder 7,
**dadurch gekennzeichnet, dass**
das Aufnahmegehäuse (300) der Umgebungsluftreinigungsvorrichtung (10, 1017, 1018) einen der Eintrittsöffnung (3021) strömungsmäßig nachgeschalteten Einlaufkanalbereich (302') aufweist, der die Eintrittsöffnung (3021) fluidisch mit dem zumindest einen Filterelement (100,101) verbindet, wobei bevorzugt eine Längserstreckung des Einlaufkanalbereichs (302') derart ausgebildet ist, dass sich die Eintrittsöffnung (3021) zwischen dem durch die Hinterachse geführten Radpaar befindet.

9. Straßenfahrzeug (1) nach einem der vorhergehenden Ansprüche,
**dadurch gekennzeichnet, dass**
die Umgebungsluftreinigungsvorrichtung (10, 1017, 1018) zumindest in Fahrtrichtung gesehen dem zumindest einen Filterelement (100,101) vorgeschaltet einen Vor- bzw. Grobabscheider (110), insbesondere ein Abscheidegitter (110), Abscheidenetz (110) und/oder Prallblech (110) und/oder zumindest ein Vorabscheidervlies (110), aufweist.

10. Straßenfahrzeug (1) nach einem der vorhergehenden Ansprüche,
**dadurch gekennzeichnet, dass**
die Umgebungsluftreinigungsvorrichtung (10, 1017, 1018) zumindest in Fahrtrichtung gesehen dem zumindest einen Filterelement (100,101) vorgeschaltet, bevorzugt einem Vor- bzw. Grobabscheider (110) vor- oder nachgeschaltet, einen Wasserabscheider (1112, 1121) aufweist, insbesondere umfassend einen Lamellenabscheider und/oder eine hydrophobe Abscheidelage, und/oder insbesondere abhängig von einem Regensensorsignal und/oder Scheibenwischersignal schließbare Klappen oder Lamellen.

11. Verwendung einer Umgebungsluftreinigungsvorrichtung (10, 1017, 1018) in einem Straßenfahrzeugs (1) nach einem der Ansprüche 1 bis 10, wobei die Umgebungsluftreinigungsvorrichtung (10, 1017, 1018) insbesondere zur Entfernung von Stäuben, insbesondere Feinstaub, und/oder Gasen aus der Umgebungsluft ausgebildet ist, wobei die Umgebungsluftreinigungsvorrichtung (10, 1017, 1018) zumindest ein Filterelement (100,101) aufweist und quer zu einer Fahrzeuglängsachse in einem Außenbereich des Straßenfahrzeugs (1) anordenbar ist,
**dadurch gekennzeichnet, dass**
die Umgebungsluftreinigungsvorrichtung (10, 1017, 1018) dazu ausgebildet ist, in einem Unterbodenbereich (4) an einem Fahrzeugheck so angeordnet zu werden, dass zumindest das zumindest eine Filterelement (100,101) in einem Montagezustand in Fahrtrichtung gesehen hinter einer Hinterachse des Straßenfahrzeugs (1) vorliegt, und die Umgebungsluftreinigungsvorrichtung (10, 1017, 1018) in einem durch einen Fahrzeugrahmen (41) bereitgestellten Bauraum aufnehmbar ist, sodass sie in Fahrzeuglängsrichtung durchströmbar ist und insbesondere in Fahrtrichtung hinter der Umgebungsluftreinigungsvorrichtung (10, 1017, 1018) eine freie Abströmzone (5) vorliegt.

12. Verwendung nach Anspruch 11, umfassend eine Montageöffnung für das Filterelement (1116), die seitlich, vertikal oder in bestimmungsgemäßer Fahrtrichtung hinten angeordnet ist, und/oder mit einem Schubladenmechanismus und/oder lösbaren Rastverbindungen für die Montage des Filterelements (1116) in der Umgebungsluftreinigungsvorrichtung.

13. Verwendung nach Anspruch 11 oder 12,
**dadurch gekennzeichnet, dass**
- das zumindest eine Filterelement (100,101) eine Anströmfläche von zumindest 100 mm x 250 mm aufweist, bevorzugt zumindest 150 mm x 500 mm, und/oder das Volumen des zumindest einen Filterelements (100,101) zumindest 6,5 I beträgt, bevorzugt zumindest 20 I, und/oder
- die Netto-Filterfläche des zumindest einen Filterelements (100,101) zumindest 3 m², bevorzugt zumindest 7 m², am meisten bevorzugt zumindest 15 m², beträgt.

14. Verwendung nach einem der Ansprüche 11 bis 13,
**dadurch gekennzeichnet, dass**
die Umgebungsluftreinigungsvorrichtung (10, 1017, 1018) einen Druckverlust bei einer Anströmung des Filterelements mit Luft bei Normbedingungen mit 1,5 m/s von höchstens 200 Pa, bevorzugt bei 2,5 m/s von höchstens 250 Pa, aufweist.

15. Verwendung nach einem der vorhergehenden Ansprüche,
**dadurch gekennzeichnet, dass**
das zumindest eine Filterelement (100,101) ein gefaltetes Filterelement (100,101) ist, das insbesondere eine variable Faltenhöhe aufweist, bevorzugt eine über eine Fahrzeughochachse gesehen variable Faltenhöhe, wobei bevorzugt durch die variable Faltenhöhe eine Anpassung der Außenkontur des Filterelements (100,101) an einen Bauraum am Fahrzeugheck erreichbar ist, besonders bevorzugt eine Anpassung an eine Kontur zumindest eines Fahrzeugteils im Unterbodenbereich, insbesondere einer Radaufhängung und/oder zumindest eines Rads und/oder zumindest eines Zusatzaggregats und/oder einer Auspuffanlage und/oder einer Fahrbatterie.

## Claims

1. Road vehicle (1), in particular passenger car or truck, in particular light truck, in particular driven by an internal combustion engine and/or electric drive which features an ambient air purification device (10, 1017, 1018) which is in particular designed to remove dusts, in particular fine particulate matter, and/or gases from the ambient air, wherein the ambient air purification device (10, 1017, 1018) features at least one filter element (100, 101) and is disposed transversely to a vehicle longitudinal axis in an outer area of the road vehicle (1),
**characterized in that**
the ambient air purification device (10, 1017, 1018) is disposed in an underbody area (4) on a vehicle tail in such a way that at least the at least one filter element (100, 101) is provided behind a rear axle of the road vehicle (1), wherein the ambient air purification device (10, 1017, 1018) can be flowed through in the vehicle longitudinal direction and behind the ambient air purification device (10, 1017, 1018) is provided in particular a free outflow zone (5) in the direction of travel, and wherein the ambient air purification device (10, 1017, 1018) is accommodated in a mounting space provided by a vehicle frame (41), wherein the ambient air purification device (10, 1017, 1018) is disposed above a transverse axis defined by an axis of rotation of a pair of wheels (2) of the rear axle.

2. Road vehicle (1) according to claim 1,
**characterized in that**
the ambient air purification device (10, 1017, 1018) is accommodated between at least two longitudinal profiles (411, 412) and/or transverse profiles (413, 414, 415) of the vehicle frame (41).

3. Road vehicle according to claim 1 or 2,
**characterized in that**
the ambient air purification device (10, 1017, 1018) features at least one air-conveying device (200) supporting the throughflow, in particular at least one fan or blower, wherein preferably the air-conveying device (200) is disposed in a vacuum manner with respect to the at least one filter element (100, 101).

4. Road vehicle (1) according to one of the claims 1 to 3,
**characterized in that**
in the underbody area (4) of the road vehicle (1), a reception device is provided to which the ambient air purification device (10, 1017, 1018) is directly or indirectly connected.

5. Road vehicle (1) according to one of the claims 1 to 4,
**characterized in that**
the ambient air purification device (10, 1017, 1018) extends in the vehicle transverse direction over a substantial part of a vehicle width, preferably over at least 30 % of the vehicle width, particularly preferably over at least 40 % of the vehicle width.

6. Road vehicle (1) according to one of the claims 1 to 5,
**characterized in that**
- the ambient air purification device (10, 1017, 1018) features at least one receiving housing (300) in which the at least one filter element (100, 101) is accommodated which features at least one inlet opening (3021) and one outlet opening (3022) and is connected to the road vehicle (1) and/or
- the ambient air purification device (10, 1017, 1018) features at least two filter elements (100, 101) which are disposed adjacent to each other, in particular in vehicle transverse direction.

7. Road vehicle (1) according to one of the preceding claims,
**characterized in that**
the ambient air purification device (10, 1017, 1018) features at least one flow guiding element (120, 130) which is disposed preferably at a front, outer lateral edge (103) of the ambient air purification device (10, 1017, 1018) and extending in the vehicle vertical direction and/or on a flank of the road vehicle (1) in a longitudinal section between rear axle and front axle and/or at a front lower edge of the ambient air purification device (10, 1017, 1018) extending in the vehicle transverse direction and/or at a rear upper lateral edge of the ambient air purification device (10, 1017, 1018) extending in the vehicle transverse direction.

8. Road vehicle (1) according to claim 6 or 7,
**characterized in that**
the receiving housing (300) of the ambient air purification device (10, 1017, 1018) features an inlet channel section (302') fluidically downstream of the inflow opening (3021) and connecting the inflow opening (3021) fluidically to the at least one filter element (100, 101), wherein preferably a longitudinal extension of the inlet channel section (302') is designed in such a way that the inflow opening (3021) is located between the pair of wheels guided through the rear axle.

9. Road vehicle (1) according to one of the preceding claims,
**characterized in that**
the ambient air purification device (10, 1017, 1018) features, as seen at least in the direction of travel and upstream of the at least one filter element (100, 101), a pre-separator or coarse separator (110), in particular a separating grid (110), a separating net (110), and/or a baffle plate (110) and/or at least a pre-separator fleece (110).

10. Road vehicle (1) according to one of the preceding claims,
**characterized in that**
the ambient air purification device (10, 1017, 1018) features, as seen at least in the direction of travel and upstream of the at least one filter element (100, 101), preferably upstream or downstream of a pre-separator or coarse separator (110), a water separator (1112, 1121), comprising in particular a lamella separator and/or a hydrophobic separating layer, and/or, in particular depending on a rain sensor signal and/or a windshield wiper signal, closable flaps or lamellae.

11. Use of an ambient air purification device (10, 1017, 1018) in a road vehicle (1) according to one of the claims 1 to 10, wherein the ambient air purification device (10, 1017, 1018) is in particular designed to remove dusts, in particular fine particulate matter, and/or gases from the ambient air, wherein the ambient air purification device (10, 1017, 1018) features at least one filter element (100, 101) and can be disposed transversely to a vehicle longitudinal axis in an outer area of the road vehicle (1),
**characterized in that**
the ambient air purification device (10, 1017, 1018) is designed to be disposed in an underbody area (4) on a vehicle tail in such a way that at least the at least one filter element (100, 101) is provided in an assembly condition behind a rear axle of the road vehicle (1), as seen in the direction of travel, and the ambient air purification device (10, 1017, 1018) can be accommodated in a mounting space provided by a vehicle frame (41), so that it can be flowed through in the vehicle longitudinal direction and that a free outflow zone (5) is provided in particular in the direction of travel behind the ambient air purification device (10, 1017, 1018).

12. Use according to claim 11, comprising an assembly opening for the filter element (1116) which is disposed laterally, vertically or, in the intended direction of travel, at the rear, and/or with a drawer mechanism and/or detachable snapfit connections for the assembly of the filter element (1116) in the ambient air purification device.

13. Use according to claim 11 or 12,
**characterized in that**
- the at least one filter element (100, 101) features an inflow surface of at least 100 mm x 250 mm, preferably at least 150 mm x 500 mm and/or the volume of the at least one filter element (100, 101) amounts to at least 6.5 I, preferably at least to 20 I, and/or
- the net filter area of the at least one filter element (100, 101) amounts to at least 3 m², preferably to at least 7 m², most preferably to at least 15 m².

14. Use according to one of the claims 11 to 13,
**characterized in that**
the ambient air purification device (10, 1017, 1018) features a pressure loss when air flows to the filter element at standard conditions at 1.5 m/s of at most 200 Pa, preferably at 2.5 m/s of at most 250 Pa.

15. Use according to one of the preceding claims,
**characterized in that**
the at least one filter element (100, 101) is a folded filter element (100, 101) featuring in particular a variable fold height, preferably a variable fold height as seen over a vehicle vertical axis, wherein preferably, thanks to the variable fold height, an adaptation of the outer contour of the filter element (100, 101) to an installation space at the vehicle tail can be realized, particularly preferably an adaptation to a contour of at least one vehicle component in the underbody area, in particular of a wheel suspension and/or at least of a wheel and/or at least of an additional device and/or of an exhaust system and/or a traction battery.

## Revendications

1. Véhicule routier (1), notamment véhicule automobile ou camion, notamment camion léger, notamment entraîné par un moteur à combustion interne et/ou entraînement électrique qui présente un dispositif de purification de l'air ambiant (10, 1017, 1018) conçu notamment pour éliminer des poussières, notamment des poussières fines, et/ou des gaz de l'air ambiant, dans lequel le dispositif de purification de l'air ambiant (10, 1017, 1018) présente au moins un élément filtrant (100, 101) et est disposé transversalement à un axe longitudinal du véhicule dans une zone extérieure du véhicule routier (1),
**caractérisé en ce que**
le dispositif de purification de l'air ambiant (10, 1017, 1018) est disposé dans une zone du dessous de caisse (4) sur un arrière du véhicule de sorte qu'au moins l'élément filtrant (100, 101), au moins au nombre d'un, se trouve derrière un essieu arrière du véhicule routier (1), dans lequel le dispositif de purification de l'air ambiant (10, 1017, 1018) peut être traversé dans le sens longitudinal du véhicule et derrière le dispositif de purification de l'air ambiant (10, 1017, 1018) se trouve notamment une zone d'évacuation libre (5) dans le sens de la marche, et dans lequel le dispositif de purification de l'air ambiant (10, 1017, 1018) est logé dans un encombrement mis à disposition par un châssis du véhicule (41), dans lequel le dispositif de purification de l'air ambiant (10, 1017, 1018) est disposé au-dessus d'un axe transversal défini par un axe de rotation d'une paire de roues (2) de l'essieu arrière.

2. Véhicule routier (1) selon la revendication 1,
**caractérisé en ce que**
le dispositif de purification de l'air ambiant (10, 1017, 1018) est logé entre au moins deux sections longitudinales (411, 412) et/ou sections transversales (413, 414, 415) du châssis du véhicule (41).

3. Véhicule routier selon la revendication 1 ou 2,
**caractérisé en ce que**
dispositif de purification de l'air ambiant (10, 1017, 1018) présente au moins un convoyeur d'air (200) pour assister le flux, notamment au moins un ventilateur ou une soufflante, dans lequel de préférence le convoyeur d'air (200) est disposé de manière aspirante par rapport à l'élément filtrant (100, 101), au moins au nombre d'un.

4. Véhicule routier (1) selon l'une des revendications 1 à 3,
**caractérisé en ce que**
dans la zone du dessous de caisse (4) du véhicule routier (1) se trouve un dispositif de réception auquel est connecté, directement ou indirectement, le dispositif de purification de l'air ambiant (10, 1017, 1018).

5. Véhicule routier (1) selon l'une des revendications 1 à 4,
**caractérisé en ce que**
le dispositif de purification de l'air ambiant (10, 1017, 1018) s'étend en direction transversale du véhicule sur une partie substantielle de la largeur du véhicule, de préférence sur 30 % de la largeur du véhicule, de façon particulièrement préférée sur au moins 40 % de la largeur du véhicule.

6. Véhicule routier (1) selon l'une des revendications 1 à 5,
**caractérisé en ce que**
- le dispositif de purification de l'air ambiant (10, 1017, 1018) présente au moins un boîtier de logement (300) dans lequel est logé l'élément filtrant (100, 101), au moins au nombre d'un, qui présente au moins une ouverture d'entrée (3021) et une ouverture de sortie (3022) et qui est relié au véhicule routier (1) et/ou
- le dispositif de purification de l'air ambiant (10, 1017, 1018) présente au moins deux éléments filtrants (100, 101) qui sont disposés l'un à côté de l'autre, notamment en direction transversale du véhicule.

7. Véhicule routier (1) selon l'une quelconque des revendications précédentes,
**caractérisé en ce que**
le dispositif de purification de l'air ambiant (10, 1017, 1018) présente au moins un élément de guidage du flux (120, 130) qui est disposé de préférence sur une arête latérale (103) avant, extérieure du dispositif de purification de l'air ambiant (10, 1017, 1018) et s'étendant dans la direction verticale du véhicule et/ou sur un flanc du véhicule routier (1) dans une zone longitudinale se trouvant entre l'essieu arrière et l'essieu avant et/ou sur une arête inférieure avant, s'étendant dans la direction transversale du véhicule, du dispositif de purification de l'air ambiant (10, 1017, 1018) et/ou sur une arête latérale arrière supérieure, s'étendant dans la direction transversale du véhicule, du dispositif de purification de l'air ambiant (10, 1017, 1018).

8. Véhicule routier (1) selon la revendication 6 ou 7,
**caractérisé en ce que**
le boîtier de logement (300) du dispositif de purification de l'air ambiant (10, 1017, 1018) présente une zone de canal d'entrée (302') placée fluidiquement en aval de l'ouverture d'entrée (3021) et reliant de manière fluide l'ouverture d'entrée (3021) à l'élément filtrant (100, 101), au moins au nombre d'un, dans lequel une extension longitudinale de la zone de canal d'entrée (302') est de préférence réalisée de telle sorte que l'ouverture d'entrée (3021) se trouve entre la paire de roues passant à travers l'essieu arrière.

9. Véhicule routier (1) selon l'une quelconque des revendications précédentes,
**caractérisé en ce que**
le dispositif de purification de l'air ambiant (10, 1017, 1018) présente, considéré au moins dans le sens de la marche et placé en amont de l'élément filtrant (100, 101), au moins au nombre d'un, un pré-séparateur ou séparateur grossier (110), notamment une grille de séparation (110), un filet de séparation (110), et/ou une tôle de chicane (110) et/ou au moins un non-tissé du pré-séparateur (110).

10. Véhicule routier (1) selon l'une quelconque des revendications précédentes,
**caractérisé en ce que**
le dispositif de purification de l'air ambiant (10, 1017, 1018) présente, considéré au moins dans le sens de la marche et placé en amont de l'élément filtrant (100, 101), au moins au nombre d'un, de préférence placé en amont ou en aval d'un pré-séparateur ou d'un séparateur grossier (110), un séparateur d'eau (1112, 1121), notamment comprenant un séparateur à lamelles et/ou une couche de séparation hydrophobe, et/ou notamment en fonction d'un signal de capteur de pluie et/ou d'un signal d'essuie-glace des volets des lamelles qui peuvent être fermés.

11. Utilisation d'un dispositif de purification de l'air ambiant (10, 1017, 1018) dans un véhicule routier (1) selon l'une quelconque des revendications 1 à 10, dans lequel le dispositif de purification de l'air ambiant (10, 1017, 1018) est conçu notamment pour éliminer des poussières, notamment des poussières fines, et/ou des gaz de l'air ambiant, dans lequel le dispositif de purification de l'air ambiant (10, 1017, 1018) présente au moins un élément filtrant (100, 101) et peut être disposé perpendiculairement à un axe longitudinal du véhicule dans une zone extérieure du véhicule routier (1),
**caractérisé en ce que**
le dispositif de purification de l'air ambiant (10, 1017, 1018) est conçu pour être disposé dans une zone du dessous de caisse (4) sur un arrière du véhicule de sorte qu'au moins l'élément filtrant (100, 101), au moins au nombre d'un, se trouve derrière un essieu arrière du véhicule routier (1), dans une condition d'assemblage considérée dans le sens de la marche, et le dispositif de purification de l'air ambiant (10, 1017, 1018) peut être logé dans un encombrement mis à disposition par un châssis du véhicule (41) de sorte qu'il puisse être traversé dans le sens longitudinal du véhicule et qu'une zone d'évacuation libre (5) se trouve notamment dans le sens de la marche derrière le dispositif de purification de l'air ambiant (10, 1017, 1018).

12. Utilisation selon la revendication 11, comprenant une ouverture de montage pour l'élément filtrant (1116) qui est disposée latéralement, verticalement ou, dans le sens de la marche conforme à l'utilisation, à l'arrière, et/ou avec un mécanisme à tiroirs et/ou des liaisons par encliquetage détachables pour le montage de l'élément filtrant (1116) dans le dispositif de purification de l'air ambiant.

13. Utilisation selon la revendication 11 ou 12,
**caractérisé en ce que**
- l'élément filtrant (100, 101), au moins au nombre d'un, présente une surface d'afflux d'au moins 100 mm x 250 mm, de préférence au moins 150 mm x 500 mm et/ou le volume de l'élément filtrant (100, 101), au moins au nombre d'un, est au moins 6,5 I, de préférence au moins 20 I, et/ou
- la surface filtrante nette de l'élément filtrant (100, 101), au moins au nombre d'un, est au moins 3 m², de préférence au moins 7 m², le plus préférablement au moins 15 m².

14. Utilisation selon l'une quelconque des revendications 11 à 13,
**caractérisé en ce que**
le dispositif de purification de l'air ambiant (10 , 1017, 1018) présente une perte de pression lors de l'entrée du flux d'air dans l'élément filtrant dans des conditions standard avec 1,5 m/s ne dépassant pas 200 Pa, de préférence avec 2,5 m/s ne dépassant pas 250 Pa.

15. Utilisation selon l'une quelconque des revendications précédentes,
**caractérisé en ce que**
l'élément filtrant (100, 101), au moins au nombre d'un, est un élément filtrant plié (100, 101) présentant notamment une hauteur de plis variable, de préférence une hauteur de plis variable vue sur un axe vertical du véhicule, dans lequel, de préférence, une adaptation du contour extérieur de l'élément filtrant (100, 101) à un encombrement à l'arrière du véhicule peut être obtenue grâce à la hauteur de plis variable, de manière particulièrement préférée une adaptation à un contour d'au moins une partie du véhicule dans la zone du dessous de caisse, notamment d'une suspension de roue et/ou d'au moins une roue et/ou d'au moins un groupe supplémentaire et/ou d'un système d'échappement et/ou d'une batterie de traction.
